(19) Europäisches Patentamt
European Patent Office
Office européen des brevets

(11) **EP 4 557 651 A1**

(12) **EUROPEAN PATENT APPLICATION**
published in accordance with Art. 153(4) EPC

(43) Date of publication:
**21.05.2025 Bulletin 2025/21**

(21) Application number: **22954288.1**

(22) Date of filing: **09.08.2022**

(51) International Patent Classification (IPC):
**H04L 5/00** (2006.01)

(52) Cooperative Patent Classification (CPC):
**H04L 5/00**

(86) International application number:
**PCT/CN2022/111065**

(87) International publication number:
**WO 2024/031308 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHAO, Zhenshan**
  **Dongguan, Guangdong 523860 (CN)**
• **ZHANG, Shichang**
  **Dongguan, Guangdong 523860 (CN)**
• **MA, Teng**
  **Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **TRANSMISSION METHOD, POSITIONING REFERENCE SIGNAL CONFIGURATION METHOD AND APPARATUS, DEVICE, AND MEDIUM**

(57) The present application discloses a transmission method, a positioning reference signal configuration method and apparatus, a device, and a medium, which relate to the field of mobile communications. The method comprises: determining a first PRS configuration according to first information; and sending a PRS to a second terminal device or receiving the PRS sent by the second terminal device on the basis of the first PRS configuration. The first terminal device determines the first PRS configuration according to the first information, such that the first terminal device can transmit the PRS with the second terminal device on the basis of the first PRS configuration, thereby realizing PRS transmission between terminal devices, and realizing the positioning of terminal device by using the PRS while transmitting the PRS.

| | |
|---|---|
| Determining a first PRS configuration based on first information | 1302 |
| Transmitting a PRS to a second terminal device or receiving a PRS from a second terminal device based on the first PRS configuration | 1304 |

FIG. 13

**Description**

**TECHNICAL FIELD**

The present disclosure relates to the field of mobile communication, and in particular, relates to a transmission method and apparatus, a positioning reference signal (PRS) configuration method and apparatus, and a device and a medium thereof.

**RELATED ART**

In a mobile communication network, a message can be directly transmitted between terminal devices over a sidelink (SL).

An SL-based positioning technology is an enhancement to a positioning technology for mobile communication networks. A PRS can be transmitted between different terminal devices over an SL. Positioning of the terminal devices can be achieved by measuring the PRS. For specific implementation of transmitting the PRS between terminal devices, further discussions and researches are needed.

**SUMMARY**

The present disclosure provides a transmission method and apparatus, a PRS configuration method and apparatus, and a device and a medium thereof. The technical solutions are as follows.

According to an aspect of the present disclosure, an SL-based transmission method is provided. The method is applicable to a first terminal device. The method includes: determining a first PRS configuration based on first information; and transmitting a PRS to a second terminal device or receiving a PRS from a second terminal device based on the first PRS configuration.

According to another aspect of the present disclosure, a method for configuring a PRS based on SL is provided. The method is applicable to a first terminal device. The method includes: acquiring configuration information of a PRS, wherein the PRS has a comb structure with a comb granularity of a first frequency domain unit. The first frequency domain unit includes frequency domain resources of n consecutive resource elements (REs) in a frequency domain, wherein n is a positive integer greater than 1.

According to another aspect of the present disclosure, a method for configuring a PRS based on SL is provided. The method is applicable to a network device. The method includes: transmitting configuration information of a PRS to a first terminal device, wherein the configuration information of the PRS includes at least one PRS configuration. The at least one PRS configuration is used to determine a first PRS configuration by the first terminal device based on first information. The first PRS configuration is used for transmitting the PRS to a second terminal device or receiving the PRS from a second terminal device by the first terminal device based on the first PRS configuration.

According to another aspect of the present disclosure, a method for configuring a PRS based on SL is provided. The method is applicable to a first terminal device. The method includes: transmitting configuration information of a PRS to a first terminal device, wherein the PRS has a comb structure with a comb granularity of a first frequency domain unit. The first frequency domain unit includes frequency domain resources of n consecutive REs in a frequency domain, wherein n is a positive integer greater than 1.

According to another aspect of the present disclosure, an SL-based transmission apparatus is provided. The apparatus includes: a determining module and a transcribing module. The determining module is configured to determine a first PRS configuration based on first information. The transcribing module is configured to transmit a PRS to a second terminal device or receive a PRS from a second terminal device based on the first PRS configuration.

According to another aspect of the present disclosure, an apparatus for configuring a PRS based on SL is provided. The apparatus includes: an acquiring module, configured to acquire configuration information of a PRS, wherein the PRS has a comb structure with a comb granularity of a first frequency domain unit. The first frequency domain unit includes frequency domain resources of n consecutive REs in a frequency domain, wherein n is a positive integer greater than 1.

According to another aspect of the present disclosure, an apparatus for configuring a PRS based on SL is provided. The apparatus includes: a transmitting module, configured to transmit configuration information of a PRS to a first terminal device, wherein the configuration information of the PRS includes at least one PRS configuration. The at least one PRS configuration is used to determine a first PRS configuration by the first terminal device based on first information. The first PRS configuration is used for transmitting the PRS to a second terminal device or receiving the PRS from a second terminal device by the first terminal device based on the first PRS configuration.

According to another aspect of the present disclosure, an apparatus for configuring a PRS based on SL is provided. The apparatus includes: a transmitting module, configured to transmit configuration information of a PRS to a first terminal device, wherein the PRS has a comb structure with a comb granularity of a first frequency domain unit. The first frequency domain unit includes frequency domain resources of n consecutive REs in a frequency domain, wherein n is a positive integer greater than 1.

According to another aspect of the present disclosure, a terminal device is provided. The terminal device includes a processor; a transceiver connected to the processor; and a memory configured to store one or more instructions executable by the processor. The processor is configured to load and execute the one or more instructions to perform the SL-based transmission method or method for configuring a PRS based on SL as described in the foregoing aspects.

According to another aspect of the present disclosure, a network device is provided. The network device includes a processor; a transceiver connected to the processor; and a memory configured to store one or more instructions executable by the processor. The processor is configured to load and execute the one or more instructions to perform the method for configuring a PRS based on SL as described in the foregoing aspects.

According to another aspect of the present disclosure, a computer-readable storage medium is provided. The readable storage medium stores one or more executable instructions. A processor is configured to load and execute the one or more executable instructions, to perform the SL-based transmission method or method for configuring a PRS based on SL as described in the foregoing aspects.

According to another aspect of the present disclosure, a chip is provided. The chip includes a programmable logic circuit and/or a program instruction. When running on a computer device, the chip is configured to perform the SL-based transmission method or method for configuring a PRS based on SL as described in the foregoing aspects based on the programmable logic circuit and/or a program.

According to another aspect of the present disclosure, a computer program product or computer program is provided. The computer program product or computer program includes one or more computer instructions. The one or more computer instructions are stored in a computer-readable storage medium. A processor is configured to read the one or more computer instructions from the computer-readable storage medium and execute the one or more computer instructions to cause a computer device to perform the SL-based transmission method or method for configuring a PRS based on SL as defined in the foregoing aspects.

The technical solutions provided in the embodiments of the present disclosure have at least the following beneficial effects.

The first terminal device determines the first PRS configuration based on the first information such that the PRS can be transmitted between the first terminal device and the second terminal device based on the first PRS configuration, thereby achieving PRS transmission between terminal devices. Based on the transmission of the PRS, positioning of terminal devices over a PRS can be achieved.

## BRIEF DESCRIPTION OF DRAWINGS

For clearer description of the technical solutions in the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic diagram of an SL communication within a network coverage according to some embodiments of the present disclosure;

FIG. 2 is a schematic diagram of an SL communication within a partial network coverage according to some embodiments of the present disclosure;

FIG. 3 is a schematic diagram of an SL communication outside a network coverage according to some embodiments of the present disclosure;

FIG. 4 is a schematic diagram of a unicast transmission according to some embodiments of the present disclosure;

FIG. 5 is a schematic diagram of a multicast transmission according to some embodiments of the present disclosure;

FIG. 6 is a schematic diagram of another multicast transmission according to some embodiments of the present disclosure;

FIG. 7 is a schematic diagram of transmission resources of a physical sidelink shared channel (PSSCH) and a physical sidelink control channel (PSCCH) according to some embodiments of the present disclosure;

FIG. 8 is a schematic diagram of an SL slot with a physical sidelink feedback channel (PSFCH) according to some embodiments of the present disclosure;

FIG. 9 is a schematic diagram of time domain positions of 4 demodulation reference signal (DMRS) time domain symbols in the case that a PSSCH occupies 13 time domain symbols according to some embodiments of the present disclosure;

FIG. 10 is a schematic diagram of DMRS frequency domain positions according to some embodiments of the present disclosure;

FIG. 11 is a schematic diagram of resource mapping of a PRS for downlink positioning according to some embodiments of the present disclosure;

FIG. 12 is a schematic diagram of an architecture of a communication system according to some embodiments of the present disclosure;

FIG. 13 is a flowchart of an SL-based transmission method according to some embodiments of the present disclosure;

FIG. 14 is a flowchart of a method for configuring a PRS based on SL according to some embodiments of the present disclosure;

FIG. 15 is a flowchart of a method for configuring a PRS based on SL according to some embodiments of the present disclosure;

FIG. 16 is a flowchart of a method for configuring a PRS based on SL according to some embodiments of the present disclosure;

FIG. 17 is a schematic diagram of a time-frequency resource of a PRS with a frequency domain granularity of a physical resource block (PRB) according to some embodiments of the present disclosure;

FIG. 18 is a schematic diagram of a time-frequency resource of a PRS with a frequency domain granularity of a subchannel according to some embodiments of the present disclosure;

FIG. 19 is a schematic diagram of a time-frequency resource of a PRS with a frequency domain granularity of a resource element group (REG) according to some embodiments of the present disclosure;

FIG. 20 is a schematic diagram of a time-frequency resource of a PRS with a comb size of 1 according to some embodiments of the present disclosure;

FIG. 21 is a schematic diagram of a time-frequency resource of a PRS with a comb size of 2 according to some embodiments of the present disclosure;

FIG. 22 is a schematic diagram of a time-frequency resource of a PRS with a comb size of 4 according to some embodiments of the present disclosure;

FIG. 23 is a schematic diagram of a time-frequency resource of a PRS with a comb size of 12 according to some embodiments of the present disclosure;

FIG. 24 is a schematic diagram of a time-frequency resource carrying a PSCCH according to some embodiments of the present disclosure;

FIG. 25 is a schematic diagram of a time-frequency resource carrying a PSCCH and a PSFCH according to some embodiments of the present disclosure;

FIG. 26 is a schematic diagram of frequency resources of different slots according to some embodiments of the present disclosure;

FIG. 27 is a flowchart of an SL-based transmission method according to some embodiments of the present disclosure;

FIG. 28 is a flowchart of an SL-based transmission method according to some embodiments of the present disclosure;

FIG. 29 is a flowchart of an SL-based transmission method according to some embodiments of the present disclosure;

FIG. 30 is a block diagram of an SL-based transmission apparatus according to some embodiments of the present disclosure;

FIG. 31 is a block diagram of an apparatus for configuring a PRS based on SL according to some embodiments of the present disclosure;

FIG. 32 is a block diagram of an SL-based transmission apparatus according to some embodiments of the present disclosure;

FIG. 33 is a block diagram of an SL-based transmission apparatus according to some embodiments of the present disclosure; and

FIG. 34 is a schematic structural diagram of a communication device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the embodiments, examples of which are illustrated in the accompanying drawings. When the following description refers to the accompanying drawings, the same numbers in different accompanying drawings represent the same or similar elements unless otherwise indicated. The embodiments described hereinafter do not represent all embodiments consistent with the present disclosure. Rather, these embodiments are merely examples of apparatus and methods consistent with some aspects of the present disclosure, as detailed in the appended claims.

The terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used in the present disclosure to describe various information, such information should not be limited to these terms. These terms are only used to distinguish one type of information from another. For example, first information may be referred to as second information, and similarly, second information may be referred to as first information, without departing from the scope of the present disclosure. The word "if," as used herein, may be interpreted as "in the case that," "when," or "in response to determining that," depending on the context.

Some terms involved in the embodiments of the present disclosure are described as follows.

**SL communication**

SL communications (SL-based communication) may be classified into the following three types based on a network coverage situation of terminal devices performing communication: an SL communication within a network coverage, an SL communication within a partial network coverage, and an SL communication outside a network coverage.

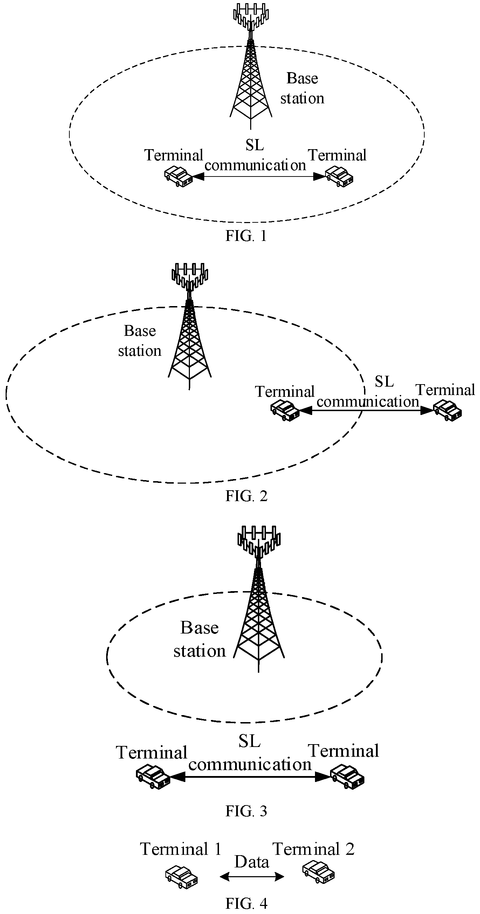

For example, FIG. 1 is a schematic diagram of an SL communication within a network coverage according to some embodiments of the present disclosure, FIG. 2 is a schematic diagram of an SL communication within a partial network coverage according to some embodiments of the present disclosure, and FIG. 3 is a schematic diagram of an SL communication outside a network coverage according to some embodiments of the present disclosure.

As illustrated in FIG. 1, during the SL communication within the network coverage, all terminal devices performing the SL communication are within a coverage of a same base station. In this way, the terminal devices are capable of performing the SL communication based on a same SL configuration by receiving configuration signaling from the base station. The SL configuration includes a time-frequency resource for the SL communication.

As illustrated in FIG. 2, during the SL communication within the partial network coverage, a first part of terminal devices performing the SL communication is within a coverage of a base station and is capable of receiving configuration signaling from the base station to perform the SL communication based on a configuration of the base station. A second part of the terminal devices performing the SL communication is outside the network coverage and is incapable of receiving the configuration signaling from the base station. In this case, the terminal device outside the network coverage determines an SL configuration based on pre-configured information and information carried in a physical sidelink broadcast channel (PSBCH) transmitted by the terminal device within the network coverage, to perform the SL communication.

As illustrated in FIG. 3, during the SL communication outside the network coverage, all terminal devices performing the SL communication are outside the network coverage. All terminal devices performing the SL communication determine an SL configuration based on pre-configured information to perform the SL communication.

**Device to Device (D2D)/Vehicle to Everything (V2X)**

D2D communication is an SL transmission technology based on D2D, which has higher spectral efficiency and lower transmission latency than a conventional technology for receiving or transmitting communication data over a base station in a cellular system. The D2D communication is used in an Internet of vehicles (IoV) system. The following two transmission modes of the SL communication are defined in the 3rd Generation Partnership Project (3GPP): a first mode and a second mode.

In the first mode, a transmission resource of a terminal device is allocated by a base station, and the terminal device transmits data on an SL based on the resource allocated by the base station. For example, the base station allocates a resource for a single transmission or a semi-static transmission to the terminal device. As illustrated in FIG. 1, the terminal device is within a network coverage. A network allocates a resource for the SL transmission to the terminal device.

In the second mode, the terminal device selects a resource from a resource pool to transmit data. As illustrated in FIG. 3, the terminal device is outside a coverage of a cell. The terminal device autonomously selects a transmission resource from a pre-configured resource pool to perform the SL transmission. Alternatively, as illustrated in FIG. 1, the terminal device autonomously selects a transmission resource from a resource pool configured by a network, to perform an SL transmission.

In the second mode, the terminal device selects the resource by performing the following two processes.

In process 1, the terminal device uses all available resources within a resource selection window as a resource set A.

In the case that the terminal device transmits data in some slots within a sensing window, the terminal device does not monitor these slots. Consequently, all resources in slots corresponding to these slots within a resource selection window are excluded by the terminal device. The terminal device determines slots corresponding to the sensing window within the resource selection window using a value set of a resource reservation period field in a configuration of the resource pool used.

In the case that the terminal device has monitored a PSCCH within the sensing window, the terminal device measures a reference signal received power (RSRP) of the PSCCH, or measures an RSRP of a PSSCH scheduled by the PSCCH. In the case that the measured RSRP is greater than an SL-RSRP threshold, and it is determined based on resource reservation information in sidelink control information (SCI) transmitted in the PSCCH that a reserved resource is within the resource selection window, the terminal device excludes the resource from the resource set A. In the case that remaining resources in the resource set A are less than X% of all resources in the resource set A before the resource exclusion, the terminal device increases the SL-RSRP threshold by 3 dB and re-performs process 1. Possible values of X are {20, 35, 50}. The terminal device determines a value of X from the value set based on a priority of data to be transmitted. The SL-RSRP threshold is also related to a priority carried in the PSCCH monitored by the terminal device and the priority of the data to be transmitted by the terminal device. The terminal device uses the remaining resources in the resource set A after the resource exclusion as a candidate resource set.

In process 2, the terminal device randomly selects a plurality of resources from the candidate resource set as resources for initial transmission and retransmission.

## New Radio (NR) SL

In the NR SL, autonomous driving needs to be supported, thereby leading to higher requirements for data interaction between vehicles, such as higher throughput, lower latency, higher reliability, larger coverage, and more flexible resource allocation.

In the NR SL, unicast, multicast, and broadcast transmission modes are supported. In the unicast transmission mode, a receiver is only one terminal device. In the multicast transmission mode, a receiver is all terminal devices in a communication group or all terminal devices within a specific transmission distance.

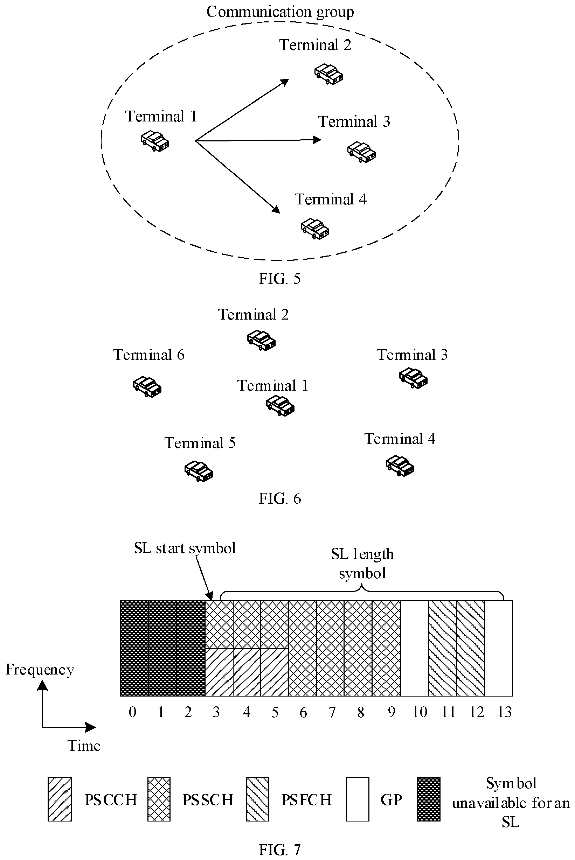

For example, FIG. 4 is a schematic diagram of a unicast transmission according to some embodiments of the present disclosure, FIG. 5 is a schematic diagram of a multicast transmission according to some embodiments of the present disclosure, and FIG. 6 is a schematic diagram of another multicast transmission according to some embodiments of the present disclosure.

As illustrated in FIG. 4, a unicast transmission is performed between a terminal device 1 and a terminal device 2. As illustrated in FIG. 5, a terminal device 1, a terminal device 2, a terminal device 3, and a terminal device 4 constitute a communication group. The terminal device 1 transmits data. Other terminal devices in the group are all terminal devices as receivers. As illustrated in FIG. 6, in a broadcast transmission mode, a receiver is any terminal device around a terminal device as a transmitter. For example, a terminal device 1 is the terminal device as a transmitter, and other terminal devices around the terminal device 1, i.e., terminal devices 2 to 6, are all terminal devices as receivers.

## Slot structure in the NR SL

In the NR SL, a PSSCH and its associated PSCCH are transmitted in a same slot. The PSCCH occupies 2 or 3 time domain symbols. In the NR SL, a time domain resource is allocated at a granularity of a slot. One slot includes a plurality of time domain symbols, for example, one slot includes 14 time domain symbols. A start point and length of time domain symbols used for SL transmission in one slot are configured over parameters SL start symbol (sl-startSLsymbol) and SL length symbol (sl-lengthSLsymbol). The last one of time domain symbols in a slot is used as a guard period (GP) symbol. The PSSCH and PSCCH can use only the other time domain symbols. However, in the case that a PSFCH transmission resource is configured in one slot, the PSSCH and PSCCH cannot occupy a time domain symbol used for a PSFCH transmission, and automatic gain control (AGC) and GP symbols before the symbol used for the PSFCH transmission.

FIG. 7 is a schematic diagram of transmission resources of a PSSCH and a PSCCH according to some embodiments of the present disclosure. As illustrated in FIG. 7, a network configures sl-StartSymbol (sl-startSLsymbols) = 3 and sl-LengthSymbols (sl-lengthSLsymbols) = 11, indicating that 11 time domain symbols starting from a time domain symbol index 3 in one slot can be used for the SL transmission. There is a transmission resource of a PSFCH in the slot. The PSFCH occupies the time domain symbols 11 and 12. The time domain symbol 11 is used as an AGC symbol of the PSFCH. The time domain symbols 10 and 13 are used as GP symbols. The time domain symbols 3 to 9 can be used for PSSCH transmission. The PSCCH occupies 3 time domain symbols, i.e., the time domain symbols 3, 4, 5. The time domain symbol 3 is usually used as an AGC symbol.

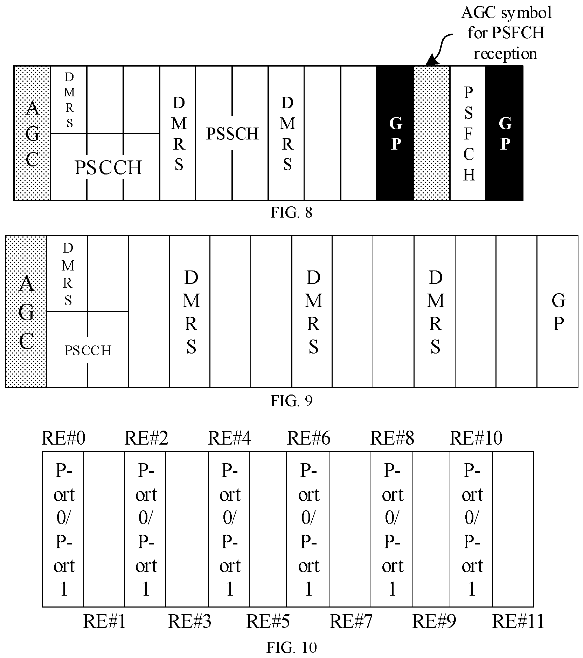

In addition to a PSCCH and a PSSCH, a PSFCH may exist in one SL slot in the NR SL. FIG. 8 is a schematic diagram of an SL slot with a PSFCH according to some embodiments of the present disclosure. As illustrated in FIG. 8, a first orthogonal frequency division multiplexing (OFDM) symbol (time domain symbol) in one slot is used as an AGC symbol. In the AGC symbol, a terminal device copies information transmitted on a second OFDM symbol. The last OFDM symbol in the slot is reserved for receive/transmit transition, which allows the terminal device to transit from a transmit (or receive) state to a receive (or transmit) state. In the remaining OFDM symbols, a PSCCH may occupy two or three OFDM symbols starting from a second OFDM symbol. In the frequency domain, a quantity of PRBs occupied by the PSCCH be within a subband range of one PSSCH. In the case that the quantity of PRBs occupied by the PSCCH is less than a size of a subchannel of the PSSCH, or a frequency domain resource of the PSSCH includes a plurality of subchannels, the PSCCH may be frequency division multiplexed with the PSSCH in the OFDM symbols on which the PSCCH is located.

A DMRS of a PSSCH in the NR SL draws on a design of an NR Uu interface and adopts a plurality of PSSCH DMRS patterns in the time domain. In one resource pool, a quantity of available DMRS patterns is related to a quantity of time domain symbols of a PSSCH in the resource pool. For a specific quantity of time domain symbols (including a first AGC symbol) of the PSSCH and a specific quantity of time domain symbols of a PSCCH, available DMRS patterns and a position of each DMRS time domain symbol in the patterns are illustrated in Table 1. FIG. 9 is a schematic diagram of time domain positions of 4 DMRS time domain symbols in the case that a PSSCH occupies 13 time domain symbols according to some embodiments of the present disclosure.

Table 1

| Quantity of time domain symbols (including a first AGC symbol) of a PSSCH | Positions of DMRS time domain symbols (relative to a position of the first AGC time domain symbol) | | | | | |
|---|---|---|---|---|---|---|
| | A quantity of time domain symbols of a PSCCH is 2 | | | A quantity of time domain symbols of a PSCCH is 3 | | |
| | Quantity of DMRS time domain symbols | | | Quantity of DMRS time domain symbols | | |
| | 2 | 3 | 4 | 2 | 3 | 4 |
| 6 | 1,5 | | | 1,5 | | |
| 7 | 1,5 | | | 1,5 | | |
| 8 | 1,5 | | | 1,5 | | |
| 9 | 3,8 | 1,4,7 | | 4,8 | 1,4,7 | |
| 10 | 3,8 | 1,4,7 | | 4,8 | 1,4,7 | |
| 11 | 3,10 | 1,5,9 | 1,4,7,10 | 4,10 | 1,5,9 | 1,4,7,10 |
| 12 | 3,10 | 1,5,9 | 1,4,7,10 | 4,10 | 1,5,9 | 1,4,7,10 |
| 13 | 3,10 | 1,6,11 | 1,4,7,10 | 4,10 | 1,6,11 | 1,4,7,10 |

In the case that a plurality of time domain DMRS patterns are configured in the resource pool, the time domain DMRS pattern to be used is selected by a transmitting terminal device and indicated in first-stage SCI. Such a design allows a terminal device moving at a high speed to select a DMRS pattern with high density, thereby ensuring accuracy of channel estimation. For a terminal device moving at a low speed, a DMRS pattern with low density may be used to improve spectral efficiency.

A PSSCH DMRS sequence is generated in a manner almost identical to that of a PSCCH DMRS sequence. The only difference is that in an initialization formula $c_{init}$ of a pseudo-random sequence $c(m)$, $N_{ID} = \sum_{i=0}^{L-1} p_i \cdot 2^{L-1-i}$. $p_i$ is an $i^{th}$ bit of a cyclic redundancy check (CRC) of the PSCCH scheduling the PSSCH. L = 24 is a quantity of bits of the CRC of the PSCCH.

A physical downlink shared channel (PDSCH) and physical uplink shared channel (PUSCH) in the NR support two types of frequency domain DMRS patterns: a DMRS frequency domain type 1 and a DMRS frequency domain type 2. For each frequency domain type, there are two different types of DMRS time domain symbols: a single DMRS time domain symbol and a dual DMRS time domain symbol. The DMRS frequency domain type 1 with the single time domain symbol supports 4 DMRS ports. The DMRS frequency domain type 2 with the single time domain symbol supports 6 DMRS ports. In a case of the dual DMRS time domain symbol, a quantity of supported ports doubles. However, in the NR SL, only the DMRS frequency domain type 1 with the single time domain symbol is supported because the PSSCH only needs to support at most two DMRS ports. FIG. 10 is a schematic diagram of DMRS frequency domain positions according to some embodiments of the present disclosure. RE in FIG. 10 refers to resource element.

**SL-based positioning**

SL-based positioning is one of enhancement solutions of a positioning technology in Release 18 (R18). The SL-based positioning needs to consider scenarios and requirements for supporting NR positioning application cases in-coverage, partial-coverage, and out-of-coverage of a cellular network, positioning requirements for V2X application cases, public safety application cases, commercial application cases, and industrial Internet of things (IIOT) application cases. Further, supports for the following functions are considered:

absolute positioning, ranging/direction finding, and relative positioning;
invesgating a positioning method based on the combination of SL measurement results and Uu interface measurement results;
invesgating an SL PRS, including signal design, physical layer control signaling, resource allocation, physical layer measurement results, a related physical layer process, or the like; and
invesgating a positioning system architecture and signaling process, such as configuration and measurement reporting.

With respect to the absolute positioning, a terminal device may directly determine its own absolute geographical location based on a measurement result. This manner may be referred to as terminal device-based absolute positioning. Alternatively, the terminal device may report the measurement result to a positioning server, for example, a location management function (LMF). Then, the LMF calculates an absolute location of the terminal device and notifies the terminal device. This manner may be referred to as terminal device-assisted absolute positioning.

With respect to the ranging, the direction finding, or the relative positioning, the terminal device may estimate information of a received PRS, such as a round trip time (RTT), an angle of arrival, and a received signal strength, to estimate a relative distance and relative direction.

**PRS resource configuration in downlink positioning**

In a network-based downlink positioning method, a PRS pattern is usually a comb structure with a comb granularity of a subcarrier or an RE. That is, in one OFDM symbol, a PRS is mapped to the frequency domain over the comb structure. The comb structure may support frequency division multiplexing of PRSs from different TRPs into a same OFDM symbol. The PRSs from different TRPs may be configured with different frequency offset values. In one slot, one PRS resource may occupy a plurality of consecutive OFDM symbols. The PRS is mapped to the plurality of OFDM symbols over a staggered structure.

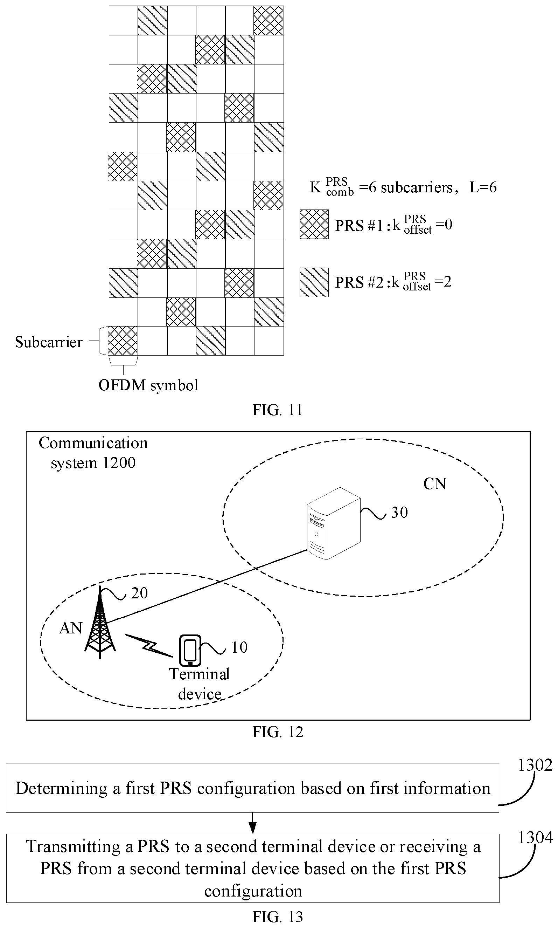

For example, FIG. 11 is a schematic diagram of resource mapping of a PRS for downlink positioning according to some embodiments of the present disclosure. As illustrated in FIG. 11, in time-frequency resources with a time domain granularity of one OFMD symbol and a frequency domain granularity of one subcarrier (or RE), 2 PRSs are configured, i.e., a PRS #1 and a PRS #2. The time-frequency resources are resources in one slot. A time-frequency resource of a PRS can be configured over parameters $K_{comb}^{PRS}$, L, and $k_{offset}^{PRS}$. $K_{comb}^{PRS}$ is a configured comb size. In FIG. 11, the comb size is $K_{comb}^{PRS} = 6$ subcarriers.

L is a quantity of OFDM symbols occupied by the PRS in one slot. In FIG. 11, L = 6. $k_{offset}^{PRS}$ is a frequency domain resource unit offset value on a first OFDM symbol for transmitting the PRS in one slot. The offset value is configured by a network and has a value range $k_{offset}^{PRS} \in \{0,1, \dots, K_{comb}^{PRS} - 1\}$. As illustrated in FIG. 11, 2 PRS resources are configured, i.e., a PRS #1 and a PRS #2. The PRS #1 corresponds to $k_{offset}^{PRS} = 0$, indicating that a frequency domain resource unit index of the PRS #1 on the first OFDM symbol configured to transmit the PRS in one slot is 0. The PRS #2 corresponds to $k_{offset}^{PRS} = 2$, indicating that a frequency domain resource unit index of the PRS #2 on the first OFDM symbol for transmitting the PRS in one slot is 2.

It should be noted that the time-frequency resource occupied by the PRS #1 illustrated in FIG. 11 may be referred to as a PRS pattern of the PRS #1. The time-frequency resource occupied by the PRS #2 illustrated in FIG. 11 may be referred to as a PRS pattern of the PRS #2. That is, the parameters used to configure the PRS can be used to represent the PRS pattern.

APRS can be transmitted between different terminal devices over an SL. Positioning of the terminal devices can be achieved by measuring the PRS. For SL positioning (SL-based positioning), if the PRS pattern is configured in a same manner as in downlink positioning, that is, resource mapping is performed on the PRS over a comb structure with a comb granularity of a subcarrier or an RE, severe in-band emission (IBE) occurs and positioning performance is affected. Further discussion and research are needed for specific implementation of transmitting a PRS between terminal devices, for example, how to design a manner of mapping a time-frequency resource of the PRS in SL positioning.

In a method according to the embodiments of the present disclosure, a first terminal device determines a first PRS configuration based on first information, such that a PRS can be transmitted between the first terminal device and a second terminal device based on the first PRS configuration, thereby achieving PRS transmission between terminal devices. Based on the transmission of the PRS, positioning of terminal devices over a PRS can be achieved. In addition, in the method according to the embodiments of the present disclosure, a PRS having a comb structure with a comb granularity of a first frequency domain unit is configured for the first terminal device. The first frequency domain unit includes n consecutive REs in a frequency domain. Because a size of the first frequency domain unit in the frequency domain is larger than one RE, frequency resources can be utilized more fully than a PRS resource mapping manner in the downlink positioning. Positioning of a terminal device over the PRS on which resource mapping is performed in the foregoing manner reduces impact of IBM on performance in the positioning of the terminal device.

FIG. 12 is a schematic diagram of an architecture of a communication system 1200 according to some embodiments of the present disclosure. For example, the architecture includes a terminal device 10, an access network (AN) device 20, and a core network (CN) device 30.

The terminal device 10 may be a user equipment (UE), an access terminal device, a subscriber unit, a subscriber station, a mobile station, a rover station, a remote station, a remote terminal device, a mobile device, a wireless communication device, a user agent, or a user apparatus. In some embodiments, the terminal device is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5th generation (5G) system, a terminal device in a future evolved public land mobile network (PLMN), or the like. These are not limited in the embodiments of the present disclosure. For convenience of description, the devices mentioned above are collectively referred to as the terminal device.

It should be noted that there are usually a plurality of terminal devices 10. One or more terminal devices 10 may be distributed in a cell managed by each AN device 20. In addition, one or more terminal devices 10 may be distributed outside the cell managed by the AN device 20. Communication may be performed between different terminal devices 10 based on an SL. Communication between the terminal devices 10 over the SL may be classified into the three types illustrated in FIGS. 1 to 3.

The AN device 20 is a device deployed in an AN to provide a wireless communication function for the terminal device 10. The AN device 20 may include various forms of a macro base station, a micro base station, a relay station, an access point, or the like. In systems employing different radio access technologies, devices with a function of the AN device may have different names, for example, gNodeB or gNB in a 5G NR system. As a communication technology evolves, the name "AN device" may change. For convenience of description, in the embodiments of the present disclosure, apparatuses providing the wireless communication function for the terminal device 10 are collectively referred to as the AN device. In some embodiments, a communication relationship is established between the terminal device 10 and the CN device 30 over the AN device 20. For example, in a long term evolution (LTE) system, the AN device 20 may be an evolved universal terrestrial radio access network (EUTRAN) or one or more eNodeBs in the EUTRAN. In the 5G NR system, the AN device 20 may be a radio access network (RAN) or one or more gNBs in the RAN.

Main functions of the CN device 30 are to provide user connections, manage users, complete bearers for services, and provide an interface to an external network as a bearer network. For example, CN devices in the 5G NR system include devices such as an access and mobility management function (AMF) entity, a user plane function (UPF) entity, and a session management function (SMF) entity. The AN device 20 and the CN device 30 may be collectively referred to as a network device.

In an example, the AN device 20 and the CN device 30 communicate with each other over a certain over-the-air technology, such as an NG interface in the 5G NR system. The AN device 20 and the terminal device 10 communicate with each other over a certain over-the-air technology, such as a Uu interface. The terminal devices 10 communicate with each other over a certain air interface technology, such as a PC5 interface.

FIG. 13 is a flowchart of an SL-based transmission method according to some embodiments of the present disclosure. The method is applicable to a first terminal device. The method includes the following processes.

In process 1302, the first terminal device determines a first PRS configuration based on first information.

The first terminal device acquires at least one PRS configuration. The first terminal device may determine the first PRS configuration from the at least one PRS configuration based on the first information.

In some embodiments, the at least one PRS configuration acquired by the first terminal device is acquired by the first terminal device based on pre-configured information, network configuration information, or first signaling. The pre-configured information is information pre-configured in the first terminal device. The network configuration information is information configured by a network device and transmitted to the first terminal device. The first signaling is transmitted by a terminal device other than the first terminal device to the first terminal device, for example, the first signaling is transmitted by a second terminal device to the first terminal device.

The first PRS configuration is a PRS configuration used by the first terminal device when the first terminal device receives or transmits a PRS. The first PRS configuration is used to configure or determine a time-frequency resource of the PRS transmitted or received by the first terminal device, i.e., a PRS pattern of the PRS. In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

The identification information of the first terminal device is information identifying the first terminal device. The time domain resource information of the PRS is information reflecting a resource occupied by the PRS in the time domain. The frequency domain resource information of the PRS is information reflecting a resource occupied by the PRS in the frequency domain.

The "positioning frequency layer" is introduced in the NR based on the "PRS". When performing positioning over a PRS, a terminal device needs to measure PRSs transmitted by a plurality of transmission and reception points (TRPs). The positioning frequency layer is a set of PRSs from one group of TRPs. These PRSs have a same subcarrier spacing, cyclic prefix (CP) type, reference point A, bandwidth, and comb size. One positioning frequency layer may include a plurality of TRPs. Each of the plurality of TRPs may include a plurality of PRS resource sets. Each of the plurality of PRS resource sets may include time-frequency resources of a plurality of PRSs. The positioning frequency layer information of the PRS is information of a positioning frequency layer to which a TRP corresponding to the PRS belongs.

The resource pool information is information reflecting a resource pool in which the time-frequency resource of the PRS is located.

Each second time domain unit includes at least one first time domain unit. Each second time domain unit may include at least two first time domain units. In some embodiments, the first time domain unit is a basic unit constituting the time-frequency resource in the time domain. A granularity of the second time domain unit in the time domain is greater than that of the first time domain unit. That is, the second time domain unit is composed of first time domain units. For example, the first time domain unit is a time domain symbol, such as an OFDM symbol, and the second time domain unit is a slot or a mini-slot.

In some embodiments, all or part of the first time domain units in the second time domain unit are used to perform an SL transmission. Therefore, when determining the first PRS configuration, the first terminal device may consider the quantity of first time domain units for performing the SL transmission in the second time domain unit.

In some embodiments, all or part of the first time domain units in the second time domain unit are used for transmitting the PRS. Therefore, when determining the first PRS configuration, the first terminal device may consider the quantity of first time domain units for transmitting the PRS in the second time domain unit.

In some embodiments, in the second time domain unit, a first time domain unit for transmitting a PSFCH cannot be used for transmitting the PRS. Therefore, when determining the first PRS configuration, the first terminal device may consider whether the second time domain unit includes a PSFCH resource.

In some embodiments, a quantity of first time domain units to which the PRS is mappable in the second time domain unit decreases if the PRS is not mappable to the first time domain unit carrying the PSCCH in the second time domain unit. Therefore, when determining the first PRS configuration, the first terminal device may consider whether the PRS is mappable to the first time domain unit carrying the PSCCH.

When a plurality of terminal devices cooperatively perform positioning, the plurality of terminal devices form a terminal device group. A first terminal device group is a terminal device group in which the first terminal device is located when participating in cooperative positioning. When a terminal device performs cooperative positioning, a PRS needs to be transmitted between the terminal device and another terminal device in a terminal device group in which the terminal device is located. Therefore, when determining the first PRS configuration, the first terminal device may consider the PRS configuration of the another terminal device performing cooperative positioning with the first terminal device in the first terminal device group.

The information predefined in the protocol is information predefined in the first terminal device based on a mobile communication network protocol supported by the first terminal device. The pre-configured information is information pre-configured in the first terminal device. The network configuration information is information configured by the network device for the first terminal device.

In some embodiments, the first information is transmitted by a terminal device other than the first terminal device to the first terminal device, for example, the first information is transmitted by the second terminal device to the first terminal device; or transmitted by the network device to the first terminal device; or preconfigured in the first terminal device. The first terminal device is capable of determining the first PRS configuration based on one type of information or a combination of a plurality of types of information in the first information.

In process 1304, the first terminal device transmits a PRS to a second terminal device or receives a PRS from a second terminal device based on the first PRS configuration.

The first terminal device may transmit the PRS to the second terminal device based on the time-frequency resource of the PRS in the first PRS configuration. Alternatively, the first terminal device may receive the PRS from the second terminal device in the time-frequency resource in the first PRS configuration. Positioning of a terminal device (the first terminal device or the second terminal device) over the PRS can be achieved by measuring the PRS transmitted between the terminal devices.

It should be noted that the second terminal device generally refers to a terminal device different from the first terminal device, and does not specifically refer to a specific terminal device. In addition, the second terminal device may include one or more terminal devices.

In summary, in the method according to these embodiments, the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

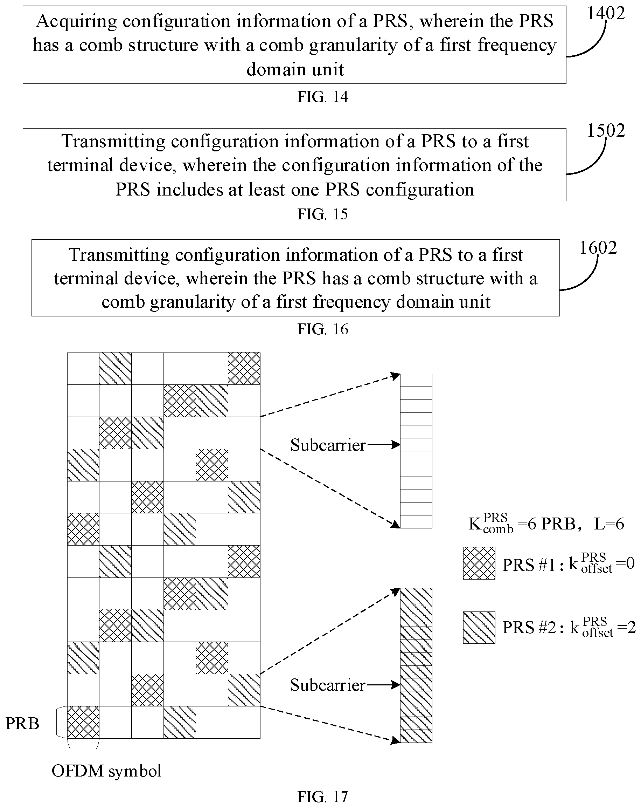

FIG. 14 is a flowchart of a method for configuring a PRS based on SL according to some embodiments of the present disclosure. The method is applicable to a first terminal device. The method includes the following processes.

In process 1402, the first terminal device acquires configuration information of a PRS, wherein the PRS has a comb structure with a comb granularity of a first frequency domain unit.

The first frequency domain unit includes frequency domain resources of n consecutive REs in the frequency domain, wherein n is a positive integer greater than 1. The consecutive REs in the frequency domain are n adjacent REs in the frequency domain on a same first time domain unit. In some embodiments, each second time domain unit includes at least one first time domain unit. Each second time domain unit may include at least two first time domain units. For example, the first time domain unit is a time domain symbol, such as an OFDM symbol, and the second time domain unit is a slot or a mini-slot.

For example, as the smallest granularity of physical layer resources in the NR, an RE corresponds to one time domain symbol (OFDM symbol) in the time domain and one subcarrier in the frequency domain. That is, the first frequency domain unit includes n consecutive subcarriers in the frequency domain. It should be noted that in the embodiments of the present disclosure, unless otherwise specified, the terms "subcarrier" and "RE" may be used interchangeably to describe frequency domain resources.

The comb structure means that two adjacent first frequency domain units configured with the PRS are arranged at a fixed interval on a same first time domain unit. The comb granularity is a granularity of a frequency resource occupied by each comb in the frequency domain in the comb structure.

In some embodiments, the first frequency domain unit includes a frequency domain resource of any one of: a PRB; a subchannel; or a REG.

The PRB includes a plurality of consecutive REs, such as 12 REs, in the frequency domain. The subchannel includes a plurality of consecutive PRBs in the frequency domain. The REG includes a plurality of consecutive subcarriers in the frequency domain. Therefore, a size of one first frequency domain unit in the frequency domain is larger than one subcarrier or one RE.

In some embodiments, the first terminal device acquires the configuration information of the PRS based on pre-configured information or network configuration information. The pre-configured information is information pre-configured in the first terminal device. The network configuration information is information configured by a network device and transmitted to the first terminal device. Alternatively, the first terminal device can receive first signaling from a second terminal device. The first signaling includes the configuration information of the PRS, such that the first terminal device can acquire the configuration information of the PRS. The second terminal device is different from the first terminal device and includes one or more terminal devices other than the first terminal device.

In some embodiments, the configuration information of the PRS includes one or more PRS configurations used to configure or determine a time-frequency resource of the PRS. The first terminal device may determine a first PRS configuration to be used from the configuration information of the PRS, for example, determine the first PRS configuration based on first information.

Upon acquiring the configuration information of the PRS, the first terminal device is capable of transmitting the PRS to a terminal device other than the first terminal device based on the time-frequency resource of the PRS configured over the configuration information, or receive, based on the time-frequency resource of the PRS configured over the configuration information, the PRS transmitted by a terminal device other than the first terminal device to the first terminal device, thereby achieving positioning of a terminal device over a PRS.

In summary, in the method according to these embodiments, the PRS having the comb structure with the comb granularity of the first frequency domain unit is configured for the first terminal device. The first frequency domain unit includes n consecutive REs in the frequency domain. Because the size of the first frequency domain unit in the frequency domain is larger than one RE, frequency resources can be utilized more fully than a PRS resource mapping manner in downlink positioning. Positioning of a terminal device over the PRS on which resource mapping is performed in the foregoing manner reduces impact of IBM on performance in the positioning of the terminal device.

FIG. 15 is a flowchart of a method for configuring a PRS based on SL according to some embodiments of the present disclosure. The method is applicable to a network device. The method includes the following processes.

In process 1502, the network device transmits configuration information of a PRS to a first terminal device, wherein the configuration information of the PRS includes at least one PRS configuration.

The at least one PRS configuration is used to determine a first PRS configuration by the first terminal device based on first information. The first PRS configuration is used for transmitting a PRS to a second terminal device or receive a PRS from a second terminal device by the first terminal device based on the first PRS configuration.

In some embodiments, the configuration information of the PRS is carried in at least one of: resource pool configuration information; or SL bandwidth part (BWP) configuration information.

The first PRS configuration is a PRS configuration used by the first terminal device when the first terminal device receives or transmits a PRS. The first PRS configuration is used to configure or determine a time-frequency resource of the PRS transmitted or received by the first terminal device, i.e., a PRS pattern of the PRS. In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether the second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

In some embodiments, each second time domain unit includes at least one first time domain unit. Each second time domain unit may include at least two first time domain units. For example, the first time domain unit is a time domain symbol, such as an OFDM symbol, and the second time domain unit is a slot or a mini-slot.

In some embodiments, the first information is transmitted by a terminal device other than the first terminal device to the first terminal device, for example, the first information is transmitted by the second terminal device to the first terminal device; or transmitted by the network device to the first terminal device; or preconfigured in the first terminal device. The first terminal device can determine the first PRS configuration based on one type of information or a combination of a plurality of types of information in the first information.

Upon determining the first PRS configuration, the first terminal device is capable of transmitting the PRS to the second terminal device based on the time-frequency resource of the PRS in the first PRS configuration. Alternatively, the first terminal device receives the PRS from the second terminal device in the time-frequency resource in the first PRS configuration. Positioning of a terminal device (the first terminal device or the second terminal device) over the PRS can be achieved by measuring the PRS transmitted between the terminal devices.

In summary, in the method according to these embodiments, the configuration information of the PRS is transmitted to the first terminal device, and the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

FIG. 16 is a flowchart of a method for configuring a PRS based on SL according to some embodiments of the present disclosure. The method is applicable to a network device. The method includes the following processes.

In process 1602, the network device transmits configuration information of a PRS to a first terminal device, wherein the PRS has a comb structure with a comb granularity of a first frequency domain unit.

The first frequency domain unit includes frequency domain resources of n consecutive REs in the frequency domain, wherein n is a positive integer greater than 1. The consecutive REs in the frequency domain are n adjacent REs in the frequency domain on a same first time domain unit. In some embodiments, each second time domain unit includes at least one first time domain unit. Each second time domain unit may include at least two first time domain units. For example, the first time domain unit is a time domain symbol, such as an OFDM symbol, and the second time domain unit is a slot or a mini-slot.

For example, as the smallest granularity of physical layer resources in the NR, an RE corresponds to one time domain symbol (OFDM symbol) in the time domain and one subcarrier in the frequency domain. That is, the first frequency domain unit includes n consecutive subcarriers in the frequency domain.

The comb structure means that two adjacent first frequency domain units configured with the PRS are arranged at a fixed interval on a same first time domain unit. The comb granularity is a granularity of a frequency resource occupied by each comb in the frequency domain in the comb structure.

In some embodiments, the first frequency domain unit includes a frequency domain resource of any one of: a PRB; a subchannel; or a REG.

The PRB includes a plurality of consecutive REs, such as 12 REs, in the frequency domain. The subchannel includes a plurality of consecutive PRBs in the frequency domain. The REG includes a plurality of consecutive subcarriers in the frequency domain. Therefore, a size of one first frequency domain unit in the frequency domain is larger than one subcarrier or one RE.

In some embodiments, the configuration information of the PRS is carried in at least one of: resource pool configuration information; or SL BWP configuration information.

In some embodiments, the configuration information of the PRS includes one or more PRS configurations used to configure or determine a time-frequency resource of the PRS. The first terminal device ia capable of determining a first PRS configuration to be used from the configuration information of the PRS, for example, the first terminal device determines the first PRS configuration based on first information.

Upon acquiring the configuration information of the PRS, the first terminal device is capable of transmitting the PRS to a terminal device other than the first terminal device based on the time-frequency resource of the PRS configured over the configuration information, or receive, based on the time-frequency resource of the PRS configured over the configuration information, the PRS transmitted by a terminal device other than the first terminal device to the first terminal device, thereby achieving positioning of a terminal device over a PRS.

In summary, in the method according to these embodiments, the PRS having the comb structure with the comb granularity of the first frequency domain unit is configured for the first terminal device. The first frequency domain unit includes n consecutive REs in the frequency domain. Because the size of the first frequency domain unit in the frequency domain is larger than one RE, frequency resources can be utilized more fully than a PRS resource mapping manner in downlink positioning. Positioning of a terminal device over the PRS on which resource mapping is performed in the foregoing manner reduces impact of IBM on performance in the positioning of the terminal device.

In the method according to the embodiments of the present disclosure, the PRS having the comb structure with a comb granularity in the frequency domain larger than an RE (a subcarrier) is configured for the first terminal device. Frequency resources can be utilized more fully than the PRS resource mapping manner in downlink positioning. Positioning of a terminal device over the PRS on which resource mapping is performed in this manner reduces impact of IBM on performance in the positioning of the terminal device.

**The following describes a PRS resource mapping manner.**

In the PRS resource mapping manner according to the embodiments of the present disclosure, a PRS has a comb structure with a comb granularity of a first frequency domain unit. The first frequency domain unit includes frequency domain resources of n consecutive REs in the frequency domain, wherein n is a positive integer greater than 1.

The consecutive REs in the frequency domain are n adjacent REs in the frequency domain on a same first time domain unit. In some embodiments, each second time domain unit includes at least one first time domain unit. Each second time domain unit may include at least two first time domain units. For example, the first time domain unit is a time domain symbol, such as an OFDM symbol, and the second time domain unit is a slot or a mini-slot.

For example, as the smallest granularity of physical layer resources in the NR, an RE corresponds to one time domain symbol (OFDM symbol) in the time domain and one subcarrier in the frequency domain. That is, the first frequency domain unit includes n consecutive subcarriers in the frequency domain.

In some embodiments, the first frequency domain unit includes a frequency domain resource of any one of: a PRB; a subchannel; or a REG.

The PRB includes a plurality of consecutive REs, such as 12 REs, in the frequency domain. The subchannel includes a plurality of consecutive PRBs in the frequency domain. The REG includes a plurality of consecutive subcarriers in the frequency domain. Therefore, a size of one first frequency domain unit in the frequency domain is larger than one subcarrier or one RE.

The PRS is configured over configuration information of the PRS. In some embodiments, the configuration information of the PRS includes at least one of a comb size, a time domain length, or a signal offset value.

The comb size includes a spacing between two adjacent first frequency domain units of the PRS on a same first time domain unit. For example, the comb size is $K_{comb}^{PRS}$., indicating that the spacing between two adjacent first frequency domain units of the PRS is $K_{comb}^{PRS} - 1$.

The time domain length includes a quantity of first time domain units occupied by the PRS in one second time domain unit. For example, the time domain length is L, indicating that the PRS occupies L first time domain units (OFDM symbols) in one second time domain unit (slot). In some embodiments, the L first time domain units are consecutive time domain units in the second time domain unit.

The signal offset value includes an offset value of a first one of first frequency domain units of the PRS in a first one of the first time domain units for transmitting the PRS in the second time domain unit. Each second time domain unit includes at least one first time domain unit. For example, the signal offset value is $k_{offset}^{PRS}$, indicating that in the first one of the first time domain units carrying the PRS in the second time domain unit, the offset value of the first one of the first frequency domain units of the PRS from the first one of the first frequency domain units in the first time domain unit is $k_{offset}^{PRS}$, which may also be regarded as that a position of the first one of the first frequency domain units of the PRS in the frequency domain is $k_{offset}^{PRS}$. In some embodiments, the signal offset value has a granularity or unit of a first frequency domain unit.

In some embodiments, the first frequency domain unit includes a PRB. An offset value indicated by the signal offset value is an offset value relative to a first frequency domain position. The first frequency domain position is determined based on any one of a frequency domain position corresponding to a first PRB of a resource pool, a frequency domain position corresponding to a first PRB of an SL BWP, a frequency domain position corresponding to a first PRB of a subchannel, a frequency domain position corresponding to a first PRB of a resource block (RB) set, or a point A.

In some embodiments, the first frequency domain unit includes a subchannel. An offset value indicated by the signal offset value is an offset value relative to a second frequency domain position. The second frequency domain position is determined based on any one of a frequency domain start position of a resource pool, a frequency domain start position of an SL BWP, a frequency domain start position of an RB set, or a point A.

In some embodiments, the first frequency domain unit includes a REG. An offset value indicated by the signal offset value is an offset value relative to a third frequency domain position. The third frequency domain position is determined based on any one of a start position of a PRB, a start position of a first PRB of a resource pool, a start position of a first PRB of an SL BWP, a start position of a first PRB of a subchannel, a start position of a first PRB of an RB set, or a point A.

For example, FIG. 17 is a schematic diagram of a time-frequency resource of a PRS with a frequency domain granularity (first frequency domain unit) of a PRB according to some embodiments of the present disclosure. As illustrated in FIG. 17, a granularity of the frequency domain is a PRB, and a granularity of the time domain is an OFDM symbol. A comb structure is used for frequency domain mapping of a PRS. A granularity of the comb structure is a PRB. That is, the PRS is mapped to all subcarriers of one PRB, and the PRS is mapped between PRBs over the comb structure. $K_{comb}^{PRS} = 6$ indicates that an interval between two adjacent PRBs of the PRS in one OFDM symbol is 6 - 1 = 5. L = 6 indicates that the PRS occupies 6 consecutive OFDM symbols in one slot. Among a plurality of OFDM symbols, a staggered structure is used to map the PRS to PRBs corresponding to the plurality of OFDM symbols. In this way, in the frequency domain, the PRS can be mapped to all subcarriers within a frequency domain range occupied by the PRS. FIG. 17 illustrates resources of two PRSs. $k_{offset}^{PRS}$ of a PRS #1 is zero PRB. That is, a frequency domain offset value of a first PRB of the PRS #1 is zero PRB in a first OFDM symbol carrying the PRS #1 in one slot. $k_{offset}^{PRS}$ of a PRS #2 is two PRBs. That is, a frequency domain offset value of a first PRB of the PRS #1 is two PRBs in a first OFDM symbol carrying the PRS #2 in one slot.

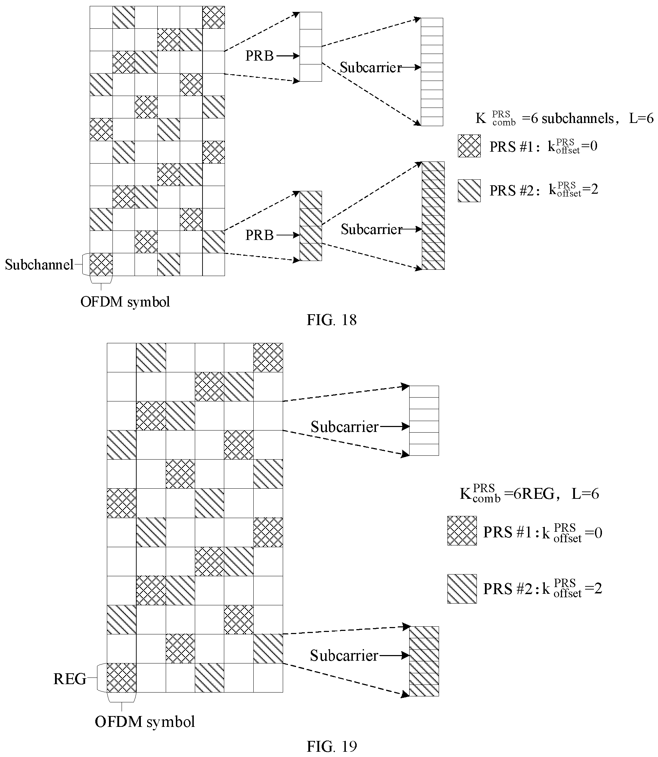

For example, FIG. 18 is a schematic diagram of a time-frequency resource of a PRS with a frequency domain granularity (first frequency domain unit) of a subchannel according to some embodiments of the present disclosure. As illustrated in FIG. 18, a granularity of the frequency domain is a subchannel, and a granularity of the time domain is an OFDM symbol. A comb structure is used for frequency domain mapping of a PRS. A granularity of the comb structure is a subchannel. One subchannel includes four consecutive PRBs. That is, the PRS is mapped to all PRBs included in one subchannel and all subcarriers of each PRB included in the subchannel, and the PRS is mapped between subchannels over the comb structure. $K_{comb}^{PRS} = 6$ indicates that an interval between two adjacent subchannels of the PRS in one OFDM symbol is 6 - 1 = 5. L = 6 indicates that the PRS occupies six consecutive OFDM symbols in one slot. Among a plurality of OFDM symbols, a staggered structure is used to map the PRS to subchannels corresponding to the plurality of OFDM symbols. In this way, in the frequency domain, the PRS can be mapped to all subcarriers within a frequency domain range occupied by the PRS. FIG. 18 illustrates resources of two PRSs. $k_{offset}^{PRS}$ of a PRS #1 is zero subchannel. That is, a frequency domain offset value of a first subchannel of the PRS #1 is zero subchannel in a first OFDM symbol carrying the PRS #1 in one slot. $k_{offset}^{PRS}$ of a PRS #2 is two subchannels. That is, a frequency domain offset value of a first subchannel of the PRS #1 is two subchannels in a first OFDM symbol carrying the PRS #2 in one slot. In some embodiments, the subchannel may also be referred to as a resource block group (RBG).

For example, FIG. 19 is a schematic diagram of a time-frequency resource of a PRS with a frequency domain granularity (first frequency domain unit) of a REG according to some embodiments of the present disclosure. As illustrated in FIG. 19, a granularity of the frequency domain is a plurality of consecutive subcarriers, and a granularity of the time domain is an OFDM symbol. In some embodiments, the granularity of a plurality of consecutive subcarriers is regarded as a granularity of a REG. One REG includes M consecutive subcarriers or REs, M is a positive integer greater than 1. A comb structure is used for frequency domain mapping of a PRS. A granularity of the comb structure is a REG. One REG includes four consecutive subcarriers. That is, the PRS is mapped to all (four) subcarriers of one REG, and the PRS is mapped between REGs OVER the comb structure. $K_{comb}^{PRS} = 6$ indicates that an interval between two adjacent REGs of the PRS in an OFDM symbol is 6 - 1 = 5. L = 6 indicates that the PRS occupies six consecutive OFDM symbols in one slot. Among a plurality of OFDM symbols, a staggered structure is used to map the PRS to REGs corresponding to the plurality of OFDM symbols. In this way, in the frequency domain, the PRS can be mapped to all subcarriers within a frequency domain range occupied by the PRS. FIG. 19 illustrates resources of two PRSs. $k_{offset}^{PRS}$ of a PRS #1 is zero REG. That is, a frequency domain offset of a first REG of the PRS #1 is zero REG in a first OFDM symbol carrying the PRS #1 in one slot. $k_{offset}^{PRS}$ of a PRS #2 is two REGs. That is, a frequency domain offset of a first REG of the PRS #1 is two REGs in a first OFDM symbol carrying the PRS #2 in one slot.

In FIGS. 17 to 19, a mapping pattern of an SL PRS in the frequency domain is described with the comb size of 6 by using PRBs, subchannels, and REGs as examples, respectively. The foregoing description of the pattern of the SL PRS by using examples in which the first frequency domain unit is a PRB, a subchannel, and a REG is also applicable to another comb size, time domain length, and signal offset value. For example, $K_{comb}^{PRS} = S$. S is an integer greater than or equal to 1. The following describes mapping patterns of PRSs in the frequency domain for different $K_{comb}^{PRS}$ values by using an example in which the first frequency domain unit is a PRB.

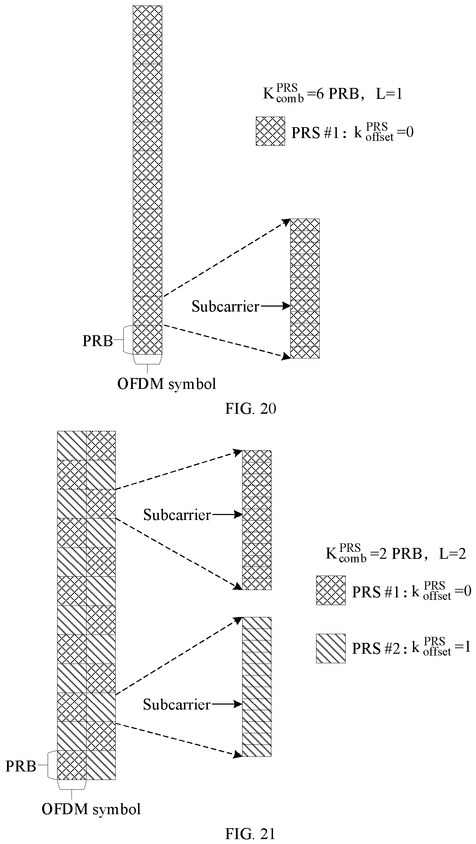

For example, FIG. 20 is a schematic diagram of a time-frequency resource of a PRS with a comb size of 1 according to some embodiments of the present disclosure. As illustrated in FIG. 20, a granularity of the frequency domain is a PRB, and a granularity of the time domain is an OFDM symbol. $K_{comb}^{PRS} = 1$ indicates that an interval between two adjacent PRBs of a PRS in an OFDM symbol is 1 - 1 = 0. That is, the PRB is mapped to all PRBs in one OFDM symbol. L = 1 indicates that the PRS occupies one OFDM symbol in one slot. FIG. 20 illustrates a resource of one PRS. $k_{offset}^{PRS}$ of the PRS is zero PRB. That is, a frequency domain offset value of a first PRB of a PRS is zero PRB in an OFDM symbol carrying the PRS in one slot. It should be noted that $k_{offset}^{PRS} = 0$ when $K_{comb}^{PRS} = 1$.

For example, FIG. 21 is a schematic diagram of a time-frequency resource of a PRS with a comb size of 2 according to some embodiments of the present disclosure. As illustrated in FIG. 21, a granularity of the frequency domain is a PRB, and a granularity of the time domain is an OFDM symbol. $K_{comb}^{PRS} = 2$ indicates that an interval between two adjacent PRBs of the PRS in an OFDM symbol is 2 - 1 = 1. L = 2 indicates that the PRS occupies two OFDM symbols in one slot. FIG. 21 illustrates resources of two PRSs. $k_{offset}^{PRS}$ of a PRS #1 is zero PRB. That is, a frequency domain offset value of the a PRB of the PRS #1 is zero PRB in a first OFDM symbol carrying the PRS #1 in one slot. $k_{offset}^{PRS}$ of a PRS #2 is one PRB. That is, a frequency domain offset value of a first PRB of the PRS #2 is one PRB in a first OFDM symbol carrying the PRS #2 in one slot.

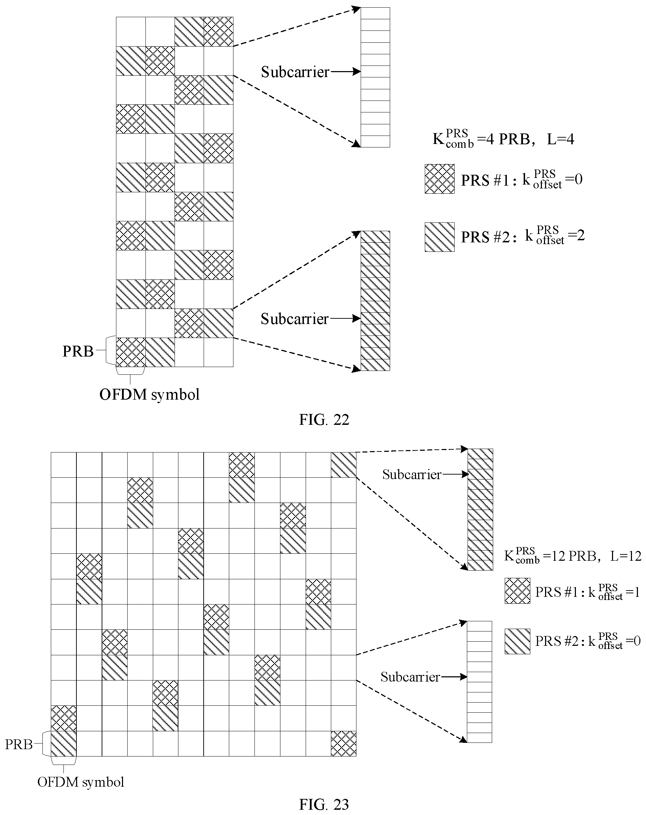

For example, FIG. 22 is a schematic diagram of a time-frequency resource of a PRS with a comb size of 4 according to some embodiments of the present disclosure. As illustrated in FIG. 22, a granularity of the frequency domain is a PRB, and a granularity of the time domain is an OFDM symbol. $K_{comb}^{PRS} = 4$ indicates that an interval between two adjacent PRBs of the PRS in an OFDM symbol is 4 - 1 = 3. L = 4 indicates that the PRS occupies four OFDM symbols in one slot. FIG. 22 illustrates resources of two PRSs. $k_{offset}^{PRS}$ of a PRS #1 is zero PRB. That is, a frequency domain offset value of a first PRB of the PRS #1 is zero PRB in a first OFDM symbol carrying the PRS #1 in one slot. $k_{offset}^{PRS}$ of a PRS #2 is two PRBs. That is, a frequency domain offset value of a first PRB of the PRS #2 is two PRBs in a first OFDM symbol carrying the PRS #2 in one slot.

For example, FIG. 23 is a schematic diagram of a time-frequency resource of a PRS with a comb size of 12 according to some embodiments of the present disclosure. As illustrated in FIG. 23, a granularity of the frequency domain is a PRB, and a granularity of the time domain is an OFDM symbol. $K_{comb}^{PRS} = 12$ indicates that an interval between two adjacent PRBs of the PRS in an OFDM symbol is 12 - 1 = 11. Because one OFDM symbol includes only 12 PRBs, the PRS is mapped to only one PRB on each OFDM symbol. L = 12 indicates that the PRS occupies 12 OFDM symbols in one slot. FIG. 23 illustrates resources of two PRSs. $k_{offset}^{PRS}$ of a PRS #1 is one PRB. That is, a frequency domain offset value of a first PRB of the PRS #1 is one PRB in a first OFDM symbol carrying the PRS #1 in one slot. $k_{offset}^{PRS}$ of a PRS #2 is zero PRB. That is, a frequency domain offset value of a first PRB of the PRS #2 is zero PRB in a first OFDM symbol carrying the PRS #2 in one slot.

It should be noted that the PRS pattern in the embodiments of the present disclosure is based on the comb structure and the first frequency domain unit being the PRB, the subchannel, or the REG. The comb size $K_{comb}^{PRS}$ is less than or equal to a quantity of OFDM symbols occupied by the PRS pattern (i.e., the time domain length L), such that a PRS in L OFDM symbols can occupy all subcarriers. However, a manner of mapping the PRS on each of the OFDM symbols is not limited in the embodiments of the present disclosure. For example, in FIG. 22, PRBs to which the PRS #1 is mapped on the four OFDM symbols are the first PRB, the third PRB, the second PRB, and the fourth PRB respectively. In some other embodiments, the PRBs to which the PRS #1 is mapped on the four OFDM symbols are the first PRB, the second PRB, the third PRB, and the fourth PRB respectively. The manner of mapping the PRS on each of the OFDM symbols is not limited in the embodiments of the present disclosure.

**The following describes frequency division multiplexing of a PRS with a PSCCH.**

In a second time domain unit, parf of the first time domain units may carry a PSCCH. For example, in FIG. 8, time domain symbols 1 to 3 carry the PSCCH. In some embodiments, the PRS is frequency division multiplexed with the PSCCH; or the PRS is not frequency division multiplexed with the PSCCH.

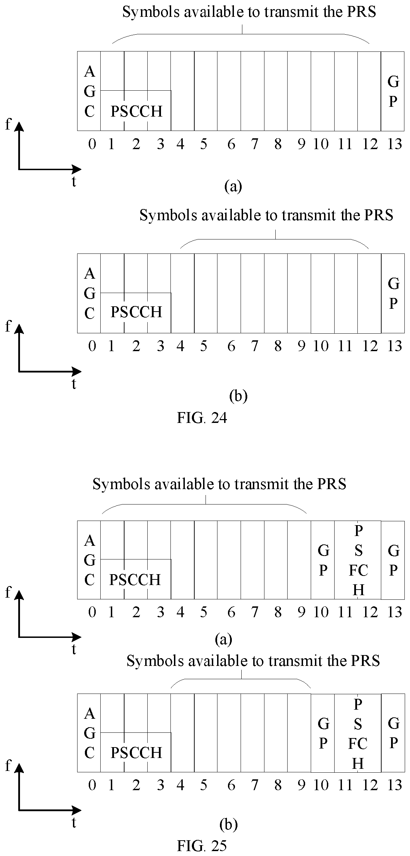

For example, FIG. 24 is a schematic diagram of a time-frequency resource carrying a PSCCH according to some embodiments of the present disclosure. As illustrated in (a) of FIG. 24, in one slot (including time domain symbols 0 to 13), the time domain symbols 1 to 3 carry a PSCCH, the time domain symbol 0 is used as an AGC symbol, and the time domain symbol 13 is used as a GP symbol. In the case that an SL PRS transmitted by a first terminal device can be frequency division multiplexed with the PSCCH transmitted by the first terminal device, because the time domain symbols 0 and 13 are not used to carry the PRS, time domain symbols available to transmit the PRS are the time domain symbols 1 to 12. As illustrated in (b) of FIG. 24, in the case that the SL PRS transmitted by the first terminal device cannot be frequency division multiplexed with the PSCCH transmitted by the first terminal device, because the time domain symbols 0 and 13 are not used to carry the PRS, the time domain symbols available to transmit the PRS are the time domain symbols 4 to 12.

**The following describes a second time domain unit (slot) carrying both a PRS and a PSFCH.**

In a second time domain unit, part of the first time domain units may carry a PSFCH. For example, in FIG. 7, the time domain symbols 11 and 12 carry the PSFCH. In some embodiments, in one second time domain unit, a first time domain unit for transmitting the PSFCH is not used for transmitting the PRS.

For example, FIG. 25 is a schematic diagram of a time-frequency resource carrying a PSCCH and a PSFCH according to some embodiments of the present disclosure. As illustrated in (a) of FIG. 25, in one slot (including time domain symbols 0 to 13), the time domain symbols 1 to 3 carry a PSCCH, the time domain symbols 11 and 12 carry a PSFCH, the time domain symbol 0 is used as an AGC symbol, and the time domain symbols 10 and 13 are used as a GP symbol. In the case that an SL PRS transmitted by a first terminal device can be frequency division multiplexed with the PSCCH transmitted by the first terminal device, and the time domain symbols for transmitting the PSCCH are not used for transmitting the PRS, because the time domain symbols 0, 10, and 13 are not used to carry the PRS, time domain symbols available to transmit the PRS are the time domain symbols 1 to 9. As illustrated in (b) of FIG. 25, in the case that the SL PRS transmitted by the first terminal device cannot be frequency division multiplexed with the PSCCH transmitted by the first terminal device, and the time domain symbols for transmitting the PSCCH are not used for transmitting the PRS, because the time domain symbols 0, 10, and 13 are not used to carry the PRS, the time domain symbols available to transmit the PRS are the time domain symbols 4 to 9.

On the premise that a first time domain unit for transmitting the PSFCH in one second time domain unit is not used for transmitting the PRS, in some embodiments, a repetition period of the PRS is an integer multiple of a period of the PSFCH, i.e., P1 = L * P2, wherein P1 is the repetition period of the PRS, P2 is the period of the PSFCH, and L is a positive integer greater than or equal to 1.

It is assumed that a resource pool includes a PSFCH resource and the period of the PSFCH resource is P2, that is, one slot including the PSFCH resource are present in every P2 slots. A quantity of time domain symbols available to transmit the PRS in a slot including the PSFCH is different from that in a slot not including the PSFCH (a time domain symbol for transmitting the PSFCH is not used for transmitting the PRS). To ensure that slots in which the PRS is repeatedly transmitted have a same quantity of time domain symbols available to transmit the PRS, the slots all include the PSFCH resource or none of them include the PSFCH resource. Therefore, in the case that the period of the PRS is P1, P1 is an integer multiple of P2.

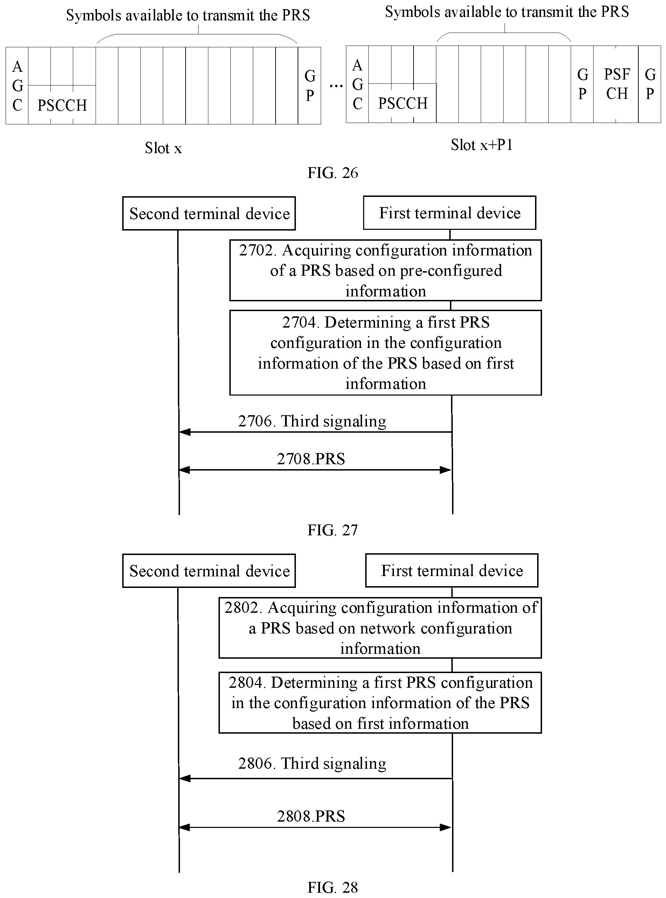

For example, FIG. 26 is a schematic diagram of frequency resources in different slots according to some embodiments of the present disclosure. As illustrated in FIG. 26, a slot x is for transmitting the PRS, and a period of the PRS is P1. Therefore, a slot x+P1 is also used for transmitting the PRS, and a period of the PSFCH is P2. In the case that P1 is not an integer multiple of P2, there may be a case in which the slot x does not include the PSFCH resource and the slot x+P1 includes the PSFCH resource. In this case, quantities of time domain symbols available to transmit the PRS in these two slots are different. In the case that a comb size of the PRS transmitted in the slot x is eight, because the quantity of time domain symbols available to transmit the PRS in the slot x+P1 (six) is less than eight (the comb size of the PRS needs to be less than a time domain length of the PRS), the PRS cannot be transmitted in the slot x+P1. Therefore, it is necessary to ensure that the repetition period of the PRS is an integer multiple of the period of the PSFCH, thereby implementing normal repeated transmission of the PRS.

In some embodiments, a comb size of a comb structure of the PRS or a quantity of first time domain units occupied by the PRS in one second time domain unit is less than or equal to a quantity of first time domain units available to transmit the PRS in one second time domain unit. In some embodiments, when a first terminal device determines a first PRS configuration to be used from configuration information of the PRS including a plurality of PRS configurations, the PRS configured over the first PRS configuration needs to meet the foregoing condition.

In some embodiments, the quantity of first time domain units available to transmit the PRS in one second time domain unit is determined based on at least one of: whether the second time domain unit includes a PSFCH resource; whether the PRS is mappable to a first time domain unit of a PSCCH; or a PRS configuration of another terminal device performing cooperative positioning with the first terminal device in a first terminal device group.

For example, in the case that quantities of OFDM symbols for transmitting the PRS in different slots of a resource pool need to be equal, a quantity of OFDM symbols available to transmit the PRS in one slot of the resource pool is determined based on a minimum quantity of OFDM symbols available to transmit the PRS in each slot included in the resource pool. For example, a PSFCH resource is configured in a slot. Because a quantity of OFDM symbols available to transmit the PRS in a slot not including a PSFCH resource is greater than a quantity of OFDM symbols available to transmit the PRS in a slot including a PSFCH resource, the minimum quantity of OFDM symbols available to transmit the PRS in each slot included in the resource pool may be determined based on the quantity of OFDM symbols available to transmit the PRS in the slot including the PSFCH in the resource pool. On this basis, a quantity of OFDM symbols for transmitting the PRS in each slot included in the resource pool can be determined. For example, as illustrated in FIG. 26, nine OFDM symbols are available to transmit the PRS in a slot not including a PSFCH (slot n), and 6 OFDM symbols are available to transmit the PRS in a slot including a PSFCH (slot n+P1). Therefore, the minimum quantity of OFDM symbols available to transmit the PRS in each slot included in the resource pool is six. When the PRS is repeatedly transmitted in the slots of the resource pool, the quantity of OFDM symbols for transmitting the PRS in each slot is six.

The configuration information of the PRS (including one or more PRS configurations) can be acquired by performing resource mapping on the PRS in the foregoing manner. The first terminal device can determine the first PRS configuration by acquiring the configuration information of the PRS, for example, based on first information, such that the first terminal device can transmit the PRS to a second terminal device or receive the PRS from the second terminal device based on the first PRS configuration. On this basis, positioning of a terminal device over a PRS can be achieved. The second terminal device generally refers to a terminal device different from the first terminal device, and is not limited to a specific device.

In the method according to the embodiments of the present disclosure, the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

**The following describes a manner in which a first terminal device determines a first PRS configuration.**

**(1) The first terminal device determines the first PRS configuration in pre-configured configuration information of a PRS based on first information.**

FIG. 27 is a flowchart of an SL-based transmission method according to some embodiments of the present disclosure. The method includes the following processes.

In process 2702, a first terminal device acquires configuration information of a PRS based on pre-configured information.

The pre-configured information is information pre-configured in the first terminal device. In some embodiments, the configuration information of the PRS is acquired by performing resource mapping on the PRS in the manner illustrated in FIGS. 17 to 26. Alternatively, the configuration information of the PRS is acquired by performing resource mapping on the PRS in another manner. The configuration information of the PRS includes at least one PRS configuration.

In process 2704, the first terminal device determines a first PRS configuration in the configuration information of the PRS based on first information.

In the case that the configuration information of the PRS includes at least one PRS configuration, the first terminal device determines the first PRS configuration from the at least one PRS configuration based on the first information. Determining the first PRS configuration by the first terminal device may also be referred to as determining a PRS pattern of the first terminal device.

In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

In some embodiments, each second time domain unit includes at least one first time domain unit. Each second time domain unit may include at least two first time domain units. For example, the first time domain unit includes an OFDM symbol, and the second time domain unit includes a slot or a mini-slot.

In some embodiments, the identification information of the first terminal device includes at least one of: a cell radio network temporary identifier (C-RNTI); a group identifier (ID) of a communication group to which the first terminal device belongs; a member ID of the first terminal device in a communication group; a layer-2 source ID; or a layer-2 destination ID.

Layer 2 in the NR includes the following sublayers: a medium access control (MAC) layer, a radio link control (RLC) layer, a Packet Data Convergence Protocol (PDCP) layer, and a Service Data Adaptation Protocol (SDAP) layer. Different terminal devices can be distinguished over layer-2 (MAC layer) source or destination IDs. In some embodiments, the identification information of the first terminal device may be all or part of the foregoing identification information. For example, the identification information of the first terminal device includes part of a bit sequence of a terminal ID.

In some embodiments, the time domain resource information of the PRS includes at least one of: information of a second time domain unit in which the PRS is located; position information of a first one of first time domain units occupied by the PRS in a second time domain unit; quantity information of first time domain units occupied by the PRS; repetition period information of the PRS; quantity information of repetitions of the PRS; time domain interval information of two adjacent repetitions of the PRS; offset information of the second time domain unit; or offset information of the first time domain unit.

The repetition period information of the PRS reflects repetition situations of the PRS in different second time domain units of a resource pool. The quantity information of repetitions of the PRS reflects a quantity of times that the PRS repeatedly appears in different second time domain units of the resource pool. The time domain interval information of two adjacent repetitions of the PRS is information with a granularity of a first time domain unit or a second time domain unit.

In some embodiments, the frequency domain resource information of the PRS includes at least one of: frequency domain resource bandwidth of the PRS; start frequency domain position information of the PRS; or start frequency domain offset information of the PRS.

In some embodiments, the positioning frequency layer information of the PRS includes at least one of: information indicating a subcarrier spacing of the PRS; a CP of the PRS; frequency domain resource bandwidth of the PRS; start frequency domain position information of the PRS; start frequency domain offset information of the PRS; information of a frequency domain reference point (point A); a comb size; or an RE spacing.

Whether the second time domain unit includes a PSFCH resource: Because the PRS cannot occupy a first time domain unit on which a PSFCH is located, a quantity of first time domain units available to transmit the PRS in a second time domain unit including a PSFCH resource is less than that in a second time domain unit not including a PSFCH resource.

Whether the PRS is mappable to the first time domain unit carrying the PSCCH: A quantity of first time domain units available to transmit the PRS when the PRS is mappable to the first time domain unit on which the PSCCH is located is greater than that when the PRS is not mappable to the first time domain unit on which the PSCCH is located.

The PRS configuration of the another terminal device performing cooperative positioning with the first terminal device in the first terminal device group: If a group of terminal devices (including the first terminal device) cooperatively perform positioning, the group of terminal devices constitutes the first terminal device group. The first terminal device group performing cooperative positioning includes a target terminal device (i.e., a terminal device to be positioned), and an anchor terminal device or a supporting terminal device (i.e., a terminal device that supports positioning of the target terminal device, which transmits or receives a PRS and provides positioning-related information). The first terminal device determines its own PRS pattern (the first PRS configuration) based on a PRS pattern (the PRS configuration) of the another terminal device in the first terminal device group. For example, the first terminal device uses a same PRS pattern as the another terminal device.

In some embodiments, the first information is transmitted by a terminal device other than the first terminal device to the first terminal device; or transmitted by a network device to the first terminal device; or pre-configured in the first terminal device or predefined in a protocol. The first terminal device is capable of determining the first PRS configuration based on one type of information or a combination of a plurality of types of information in the first information.

In some embodiments, the first terminal device acquires second signaling from a second terminal device, wherein the second signaling includes the first information, such that the first terminal device acquires the first information. The second signaling includes at least one of: PC5-radio resource control (RRC) signaling; a MAC control element (CE); or an SCI.

In process 2706, the first terminal device transmits third signaling to the second terminal device, wherein the third signaling indicates the first PRS configuration.

In some embodiments, if the first terminal device determines the PRS pattern (the first PRS configuration), the first terminal device indicates the PRS pattern to the second terminal device over the third signaling. In some embodiments, the third signaling includes at least one of: PC5-RRC signaling; a MAC CE; or an SCI.

The second terminal device generally refers to a terminal device different from the first terminal device, and is not limited to a specific terminal device. In some embodiments, the first terminal device indicates the first PRS configuration to the second terminal device over the third signaling. For example, the first terminal device indicates the first PRS configuration over at least one of the MAC CE or the SCI.

In process 2708, the first terminal device transmits the PRS to the second terminal device or receives the PRS from the second terminal device based on the first PRS configuration.

The first terminal device is capable of transmitting the PRS to the second terminal device based on the time-frequency resource of the PRS in the first PRS configuration. Alternatively, the first terminal device is capable of receiving the PRS from the second terminal device in the time-frequency resource in the first PRS configuration. Positioning of a terminal device (the first terminal device or the second terminal device) over the PRS can be achieved by measuring the PRS transmitted between the terminal devices.

It should be noted that the second terminal device generally refers to a terminal device different from the first terminal device, and does not specifically refer to a specific terminal device. In addition, the second terminal device may include one or more terminal devices.

In summary, in the method according to these embodiments, the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

**(2) The first terminal device determines the first PRS configuration in network-configured configuration information of a PRS based on first information.**

FIG. 28 is a flowchart of an SL-based transmission method according to some embodiments of the present disclosure. The method includes the following processes.

In process 2802, a first terminal device acquires configuration information of a PRS based on network configuration information.

The network configuration information is information configured by a network device and transmitted to the first terminal device. In some embodiments, the configuration information of the PRS is acquired by performing resource mapping on the PRS in the manner illustrated in FIGS. 17 to 26. Alternatively, the configuration information of the PRS is acquired by performing resource mapping on the PRS in another manner. The configuration information of the PRS includes at least one PRS configuration.

In some embodiments, the network configuration information includes at least one of: resource pool configuration information; or SL BWP configuration information.

In process 2804, the first terminal device determines a first PRS configuration in the configuration information of the PRS based on first information.

In the case that the configuration information of the PRS includes at least one PRS configuration, the first terminal device determines the first PRS configuration from the at least one PRS configuration based on the first information. Determining the first PRS configuration by the first terminal device may also be referred to as determining a PRS pattern of the first terminal device.

In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

In some embodiments, each second time domain unit includes at least one first time domain unit. Each second time domain unit may include at least two first time domain units. For example, the first time domain unit includes an OFDM symbol, and the second time domain unit includes a slot or a mini-slot.

In some embodiments, the identification information of the first terminal device includes at least one of: a C-RNTI; a group ID of a communication group to which the first terminal device belongs; a member ID of the first terminal device in a communication group; a layer-2 source ID; or a layer-2 destination ID.

In some embodiments, the time domain resource information of the PRS includes at least one of: information of a second time domain unit in which the PRS is located; position information of a first one of the first time domain units occupied by the PRS in a second time domain unit; quantity information of the first time domain units occupied by the PRS; repetition period information of the PRS; quantity information of repetitions of the PRS; time domain interval information of two adjacent repetitions of the PRS; offset information of a second time domain unit; or offset information of the first time domain unit.

In some embodiments, the frequency domain resource information of the PRS includes at least one of: frequency domain resource bandwidth of the PRS; start frequency domain position information of the PRS; or start frequency domain offset information of the PRS.

In some embodiments, the positioning frequency layer information of the PRS includes at least one of: information indicating a subcarrier spacing of the PRS; a CP of the PRS; frequency domain resource bandwidth of the PRS; start frequency domain position information of the PRS; start frequency domain offset information of the PRS; information of a frequency domain reference point; a comb size; or an RE spacing.

In some embodiments, the first information is transmitted by a terminal device other than the first terminal device to the first terminal device; or transmitted by a network device to the first terminal device; or pre-configured in the first terminal device or predefined in a protocol. The first terminal device can determine the first PRS configuration based on one type of information or a combination of a plurality of types of information in the first information.

In some embodiments, the first terminal device acquires second signaling from a second terminal device, wherein the second signaling includes the first information, such that the first terminal device acquires the first information. The second signaling includes at least one of: PC5-RRC signaling; a MAC CE; or an SCI.

In process 2806, the first terminal device transmits third signaling to the second terminal device. The third signaling indicates the first PRS configuration.

In some embodiments, in the case that the first terminal device determines the PRS pattern (the first PRS configuration), the first terminal device indicates the PRS pattern to the second terminal device over the third signaling. In some embodiments, the third signaling includes at least one of: PC5-RRC signaling; a MAC CE; or an SCI.

The second terminal device generally refers to a terminal device different from the first terminal device, and is not limited to a specific terminal device. In some embodiments, the first terminal device indicates the first PRS configuration to the second terminal device over the third signaling. For example, the first terminal device indicates the first PRS configuration over at least one of the MAC CE or the SCI.

In process 2808, the first terminal device transmits the PRS to the second terminal device or receives the PRS from the second terminal device based on the first PRS configuration.

The first terminal device is capable of transmitting the PRS to the second terminal device based on the time-frequency resource of the PRS in the first PRS configuration. Alternatively, the first terminal device is capable of receiving the PRS from the second terminal device in the time-frequency resource in the first PRS configuration. Positioning of a terminal device (the first terminal device or the second terminal device) over the PRS can be achieved by measuring the PRS transmitted between the terminal devices.

It should be noted that the second terminal device generally refers to a terminal device different from the first terminal device, and does not specifically refer to a specific terminal device. In addition, the second terminal device may include one or more terminal devices.

In summary, in the method according to these embodiments, the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

**(3) The first terminal device determines, based on first information, the first PRS configuration in configuration information of a PRS transmitted by another terminal device.**

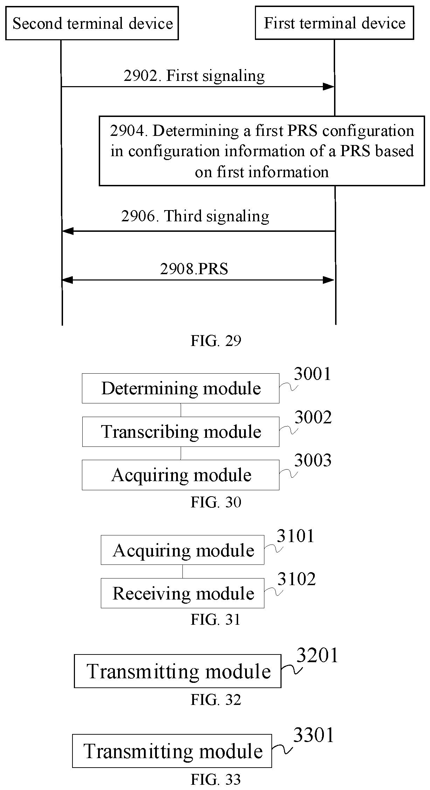

FIG. 29 is a flowchart of an SL-based transmission method according to some embodiments of the present disclosure. The method includes the following processes.

In process 2902, a first terminal device receives first signaling from a second terminal device.

The first signaling includes configuration information of a PRS. In some embodiments, the first signaling includes at least one of: PC5-RRC signaling; a MAC CE; or an SCI.

In some embodiments, the configuration information of the PRS is acquired by performing resource mapping on the PRS in the manner illustrated in FIGS. 17 to 26. Alternatively, the configuration information of the PRS is acquired by performing resource mapping on the PRS in another manner. The configuration information of the PRS includes at least one PRS configuration.

In process 2904, the first terminal device determines a first PRS configuration in the configuration information of the PRS based on first information.

In the case that the configuration information of the PRS includes at least one PRS configuration, the first terminal device determines the first PRS configuration from the at least one PRS configuration based on the first information. Determining the first PRS configuration by the first terminal device may also be referred to as determining a PRS pattern of the first terminal device.

In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

In some embodiments, each second time domain unit includes at least one first time domain unit. Each second time domain unit may include at least two first time domain units. For example, the first time domain unit includes an OFDM symbol, and the second time domain unit includes a slot or a mini-slot.

In some embodiments, the identification information of the first terminal device includes at least one of: a C-RNTI; a group ID of a communication group to which the first terminal device belongs; a member ID of the first terminal device in a communication group; a layer-2 source ID; or a layer-2 destination ID.

In some embodiments, the time domain resource information of the PRS includes at least one of: information of a second time domain unit in which the PRS is located; position information of a first one of first time domain units occupied by the PRS in a second time domain unit; quantity information of the first time domain units occupied by the PRS; repetition period information of the PRS; quantity information of repetitions of the PRS; time domain interval information of two adjacent repetitions of the PRS; offset information of the second time domain unit; or offset information of the first time domain unit.

In some embodiments, the frequency domain resource information of the PRS includes at least one of: frequency domain resource bandwidth of the PRS; start frequency domain position information of the PRS; or start frequency domain offset information of the PRS.

In some embodiments, the positioning frequency layer information of the PRS includes at least one of: information indicating a subcarrier spacing of the PRS; a CP of the PRS; frequency domain resource bandwidth of the PRS; start frequency domain position information of the PRS; start frequency domain offset information of the PRS; information of a frequency domain reference point; a comb size; or an RE spacing.

In some embodiments, the first information is transmitted by a terminal device other than the first terminal device to the first terminal device; or transmitted by a network device to the first terminal device; or pre-configured in the first terminal device or predefined in a protocol. The first terminal device can determine the first PRS configuration based on one type of information or a combination of a plurality of types of information in the first information.

In some embodiments, the first terminal device acquires second signaling from a second terminal device, wherein the second signaling includes the first information, such that the first terminal device acquires the first information. The second signaling includes at least one of: PC5-RRC signaling; a MAC CE; or an SCI.

In process 2906, the first terminal device transmits third signaling to the second terminal device, wherein the third signaling indicates the first PRS configuration.

In some embodiments, in the case that the first terminal device determines the PRS pattern (the first PRS configuration), the first terminal device indicates the PRS pattern to the second terminal device over the third signaling. In some embodiments, the third signaling includes at least one of: PC5-RRC signaling; a MAC CE; or an SCI.

The second terminal device generally refers to a terminal device different from the first terminal device, and is not limited to a specific terminal device. In some embodiments, the first terminal device indicates the first PRS configuration to the second terminal device over the third signaling. For example, the first terminal device indicates the first PRS configuration over at least one of the MAC CE or the SCI.

In process 2908, the first terminal device transmits the PRS to the second terminal device or receives the PRS from the second terminal device based on the first PRS configuration.

The first terminal device is capable of transmitting the PRS to the second terminal device based on the time-frequency resource of the PRS in the first PRS configuration. Alternatively, the first terminal device is capable of receiving the PRS from the second terminal device in the time-frequency resource in the first PRS configuration. Positioning of a terminal device (the first terminal device or the second terminal device) over the PRS can be achieved by measuring the PRS transmitted between the terminal devices.

It should be noted that the second terminal device generally refers to a terminal device different from the first terminal device, and does not specifically refer to a specific terminal device. In addition, the second terminal device may include one or more terminal devices.

In summary, in the method according to these embodiments, the first terminal device determines the first PRS configuration based on the first information, such that the PRS can be transmitted between the first terminal device and the second terminal device based on the first PRS configuration, thereby achieving PRS transmission between terminal devices. Based on the transmission of the PRS, positioning of terminal devices over the PRS can be achieved.

It should be noted that the second terminal device generally refers to a terminal device different from the first terminal device, and does not specifically refer to a specific terminal device. In addition, the second terminal device may include one or more terminal devices. Furthermore, the second terminal device transmitting the first signaling to the first terminal device, the second terminal device transmitting the second signaling to the first terminal device, the second terminal device receiving the third signaling from the first terminal device, and the second terminal device transmitting the PRS with the first terminal device are all the same, all different, or partially the same.

It should be noted that in the methods illustrated in FIGS. 27 to 29, the processes performed between the first terminal device and the second terminal device are interchangeable. That is, the first terminal device performs the processes of the second terminal device, and the second terminal device performs the processes of the first terminal device. The first terminal device and the second terminal device are merely intended to make a distinction that the two terminal devices are different terminal devices, and do not specifically refer to specific terminal devices.

It should be noted that a sequence of the processes of the method provided in the embodiments of the present disclosure may be appropriately adjusted, the method may have more or fewer processes based on a situation, and different processes can be freely combined to form new embodiments. Any alternative methods easily conceivable by a person skilled in the art within the technical scope of the present disclosure shall fall within the protection scope of the present disclosure. Therefore, details are not described herein again. In addition, an order of the foregoing different situations does not have a preferred meaning, but is only for convenience of expression.

FIG. 30 is a block diagram of an SL-based transmission apparatus according to some embodiments of the present disclosure. As illustrated in FIG. 30, the apparatus includes: a determining module 3001 and a transcribing module 3002.

The determining module 3001 is configured to determine a first PRS configuration based on first information.

The transcribing module 3002 is configured to transmit a PRS to a second terminal device or receive a PRS from a second terminal device based on the first PRS configuration.

In some embodiments, the first information includes at least one of: identification information of the apparatus; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device in an apparatus group, wherein the apparatus group performs cooperative positioning with the apparatus; information predefined in a protocol; pre-configured information; or network configuration information. Each second time domain unit includes at least one first time domain unit.

In some embodiments, the identification information of the apparatus includes at least one of: a C-RNTI; a group ID of a communication group to which the apparatus belongs; a member ID of the apparatus in a communication group; a layer-2 source ID; or a layer-2 destination ID.

In some embodiments, the time domain resource information of the PRS includes at least one of: information of a second time domain unit in which the PRS is located; position information of a first one of first time domain units occupied by the PRS in a second time domain unit; quantity information of first time domain units occupied by the PRS; repetition period information of the PRS; quantity information of repetitions of the PRS; time domain interval information of two adjacent repetitions of the PRS; offset information of a second time domain unit; or offset information of the first time domain unit.

In some embodiments, the frequency domain resource information of the PRS includes at least one of: frequency domain resource bandwidth of the PRS; start frequency domain position information of the PRS; or start frequency domain offset information of the PRS.

In some embodiments, the positioning frequency layer information of the PRS includes at least one of: information indicating a subcarrier spacing of the PRS; a CP of the PRS; frequency domain resource bandwidth of the PRS; start frequency domain position information of the PRS; start frequency domain offset information of the PRS; information of a frequency domain reference point; a comb size; or an RE spacing.

In some embodiments, the apparatus further includes: an acquiring module 3003.

The acquiring module 3003 is configured to acquire configuration information of the PRS, wherein the configuration information of the PRS includes at least one PRS configuration.

The determining module 3001 is configured to determine the first PRS configuration from the at least one PRS configuration based on the first information.

In some embodiments, the acquiring module 3003 is configured to acquire the configuration information of the PRS based on pre-configured information or network configuration information.

In some embodiments, the network configuration information includes at least one of: resource pool configuration information; or SL BWP configuration information.

In some embodiments, the transcribing module 3002 is configured to receive first signaling from the second terminal device, wherein the first signaling includes the configuration information of the PRS.

In some embodiments, the first signaling includes at least one of: PC5-RRC signaling; a MAC CE; or an SCI.

In some embodiments, the apparatus further includes: an acquiring module 3003.

The acquiring module 3003 is configured to acquire second signaling from the second terminal device, wherein the second signaling includes the first information. The second signaling includes at least one of: PC5-RRC signaling; a MAC CE; or an SCI.

In some embodiments, the transcribing module 3002 is configured to transmit third signaling to the second terminal device, wherein the third signaling indicates the first PRS configuration. The third signaling includes at least one of: PC5-RRC signaling; a MAC CE; or an SCI.

In some embodiments, the PRS has a comb structure with a comb granularity of a first frequency domain unit. The first frequency domain unit includes frequency domain resources of n consecutive REs in the frequency domain, wherein n is a positive integer greater than 1.

In some embodiments, the first frequency domain unit includes a frequency domain resource of any one of: a PRB; a subchannel; or a REG. The subchannel includes a plurality of consecutive PRBs in the frequency domain. The REG includes a plurality of consecutive subcarriers in the frequency domain.

In some embodiments, the first PRS configuration includes at least one of the comb size, a time domain length, or a signal offset value.

The comb size includes a spacing between two adjacent first frequency domain units of the PRS in a same first time domain unit.

The time domain length includes a quantity of first time domain units occupied by the PRS in one second time domain unit.

The signal offset value includes an offset value of a first one of first frequency domain units of the PRS in a first one of first time domain units in a second time domain unit. Each second time domain unit includes at least one first time domain unit.

In some embodiments, the PRS is frequency division multiplexed with a PSCCH; or the PRS is not frequency division multiplexed with a PSCCH.

In some embodiments, in one second time domain unit, a first time domain unit for transmitting a PSFCH is not used for transmitting the PRS.

In some embodiments, the repetition period of the PRS is an integer multiple of a period of the PSFCH.

In some embodiments, a comb size of the comb structure or a quantity of first time domain units occupied by the PRS in one second time domain unit is less than or equal to a quantity of first time domain units available to transmit the PRS in one second time domain unit.

In some embodiments, the quantity of first time domain units available to transmit the PRS in one second time domain unit is determined based on at least one of: whether the second time domain unit includes a PSFCH resource; whether the PRS is mappable to the first time domain unit of the PSCCH; or the PRS configuration of another terminal device in the apparatus group, wherein the apparatus group performs cooperative positioning with the apparatus.

In some embodiments, the first time domain unit includes an OFDM symbol, and the second time domain unit includes a slot or a mini-slot.

FIG. 31 is a block diagram of an apparatus for configuring a PRS based on SL according to some embodiments of the present disclosure. As illustrated in FIG. 31, the apparatus includes: an acquiring module 3101.

The acquiring module 3101 is configured to acquire configuration information of a PRS, wherein the PRS has a comb structure with a comb granularity of a first frequency domain unit.

The first frequency domain unit includes frequency domain resources of n consecutive REs in the frequency domain, wherein n is a positive integer greater than 1.

In some embodiments, the first frequency domain unit includes a frequency domain resource of any one of: a PRB; a subchannel; or a REG. The subchannel includes a plurality of consecutive PRBs in the frequency domain. The REG includes a plurality of consecutive subcarriers in the frequency domain.

In some embodiments, the configuration information of the PRS includes at least one of a comb size, a time domain length, or a signal offset value.

The comb size includes a spacing between two adjacent first frequency domain units of the PRS in a same first time domain unit.

The time domain length includes a quantity of first time domain units occupied by the PRS in one second time domain unit.

The signal offset value includes an offset value of a first one of first frequency domain units of the PRS in a first one of first time domain units in a second time domain unit. Each second time domain unit includes at least one first time domain unit.

In some embodiments, the PRS is frequency division multiplexed with a PSCCH; or the PRS is not frequency division multiplexed with a PSCCH.

In some embodiments, in one second time domain unit, a first time domain unit for transmitting a PSFCH is not used for transmitting the PRS.

In some embodiments, a repetition period of the PRS is an integer multiple of a period of the PSFCH.

In some embodiments, a comb size of the comb structure or a quantity of first time domain units occupied by the PRS in one second time domain unit is less than or equal to a quantity of first time domain units available to transmit the PRS in one second time domain unit.

In some embodiments, the quantity of first time domain units available to transmit the PRS in one second time domain unit is determined based on at least one of: whether the second time domain unit includes a PSFCH resource; whether the PRS is mappable to a first time domain unit of a PSCCH; or a PRS configuration of another terminal device in an apparatus group, wherein the apparatus group performs cooperative positioning with the apparatus.

In some embodiments, the acquiring module 3101 is configured to acquire the configuration information of the PRS based on pre-configured information or network configuration information.

In some embodiments, the network configuration information includes at least one of: resource pool configuration information; or SL BWP configuration information.

In some embodiments, the apparatus further includes: a receiving module 3102.

The receiving module 3102 is configured to receive first signaling from a second terminal device, wherein the first signaling includes the configuration information of the PRS.

In some embodiments, the first signaling includes at least one of: PC5-RRC signaling; a MAC CE; or an SCI.

In some embodiments, the first time domain unit includes an OFDM symbol, and the second time domain unit includes a slot or a mini-slot.

FIG. 32 is a block diagram of an SL-based transmission apparatus according to some embodiments of the present disclosure. As illustrated in FIG. 32, the apparatus includes: a transmitting module 3201.

The transmitting module 3201 is configured to transmit configuration information of a PRS to a first terminal device, wherein the configuration information of the PRS includes at least one PRS configuration.

The at least one PRS configuration is used to determine a first PRS configuration by the first terminal device based on first information. The first PRS configuration is used for transmitting the PRS to a second terminal device or receiving a PRS from a second terminal device by the first terminal device based on the first PRS configuration.

In some embodiments, the first information includes at least one of: identification information of the first terminal device; time domain resource information of the PRS; frequency domain resource information of the PRS; positioning frequency layer information of the PRS; resource pool information; a quantity of first time domain units for performing an SL transmission in a second time domain unit; a quantity of first time domain units for transmitting the PRS in a second time domain unit; whether a second time domain unit includes a PSFCH resource; whether the PRS is mappable to a first time domain unit carrying a PSCCH; a PRS configuration of another terminal device performing cooperative positioning with the first terminal device in a first terminal device group; information predefined in a protocol; pre-configured information; or network configuration information.

Each second time domain unit includes at least one first time domain unit.

In some embodiments, the configuration information of the PRS is carried in at least one of: resource pool configuration information; or SL BWP configuration information.

In some embodiments, the PRS has a comb structure with a comb granularity of a first frequency domain unit. The first frequency domain unit includes frequency domain resources of n consecutive REs in the frequency domain, wherein n is a positive integer greater than 1.

In some embodiments, the first frequency domain unit includes a frequency domain resource of any one of: a PRB; a subchannel; or a REG. The subchannel includes a plurality of consecutive PRBs in the frequency domain. The REG includes a plurality of consecutive subcarriers in the frequency domain.

In some embodiments, the first PRS configuration includes at least one of a comb size, a time domain length, or a signal offset value.

The comb size includes a spacing between two adjacent first frequency domain units of the PRS in a same first time domain unit.

The time domain length includes a quantity of first time domain units occupied by the PRS in one second time domain unit.

The signal offset value includes an offset value of a first one of first frequency domain units of the PRS in a first one of first time domain units in a second time domain unit. Each second time domain unit includes at least one first time domain unit.

In some embodiments, the PRS is frequency division multiplexed with a PSCCH; or the PRS is not frequency division multiplexed with a PSCCH.

In some embodiments, in one second time domain unit, a first time domain unit for transmitting a PSFCH is not used for transmitting the PRS.

In some embodiments, a repetition period of the PRS is an integer multiple of a period of the PSFCH.

In some embodiments, a comb size of the comb structure or a quantity of first time domain units occupied by the PRS in one second time domain unit is less than or equal to a quantity of first time domain units available to transmit the PRS in one second time domain unit.

In some embodiments, the quantity of first time domain units available to transmit the PRS in one second time domain unit is determined based on at least one of: whether the second time domain unit includes a PSFCH resource; whether the PRS is mappable to the first time domain unit of the PSCCH; or the PRS configuration of the another terminal device performing cooperative positioning with the first terminal device in the first terminal device group.

In some embodiments, the first time domain unit includes an OFDM symbol, and the second time domain unit includes a slot or a mini-slot.

FIG. 33 is a block diagram of an SL-based transmission apparatus according to some embodiments of the present disclosure. As illustrated in FIG. 33, the apparatus includes: a transmitting module 3301.

The transmitting module 3301 is configured to transmit configuration information of a PRS to a first terminal device, wherein the PRS has a comb structure with a comb granularity of a first frequency domain unit.

The first frequency domain unit includes frequency domain resources of n consecutive REs in the frequency domain, wherein n is a positive integer greater than 1.

In some embodiments, the first frequency domain unit includes a frequency domain resource of any one of: a PRB; a subchannel; or a REG. The subchannel includes a plurality of consecutive PRBs in the frequency domain. The REG includes a plurality of consecutive subcarriers in the frequency domain.

In some embodiments, the configuration information of the PRS includes at least one of a comb size, a time domain length, or a signal offset value.

The comb size includes a spacing between two adjacent first frequency domain units of the PRS in a same first time domain unit.

The time domain length includes a quantity of first time domain units occupied by the PRS in one second time domain unit.

The signal offset value includes an offset value of a first one of first frequency domain units of the PRS in a first one of first time domain units in a second time domain unit. Each second time domain unit includes at least one first time domain unit.

In some embodiments, the PRS is frequency division multiplexed with a PSCCH; or the PRS is not frequency division multiplexed with the PSCCH.

In some embodiments, in one second time domain unit, a first time domain unit for transmitting a PSFCH is not used for transmitting the PRS.

In some embodiments, a repetition period of the PRS is an integer multiple of a period of the PSFCH.

In some embodiments, a comb size of the comb structure or a quantity of first time domain units occupied by the PRS in one second time domain unit is less than or equal to a quantity of first time domain units available to transmit the PRS in one second time domain unit.

In some embodiments, the quantity of first time domain units available to transmit the PRS in one second time domain unit is determined based on at least one of: whether the second time domain unit includes a PSFCH resource; whether the PRS is mappable to a first time domain unit of a PSCCH; or a PRS configuration of another terminal device performing cooperative positioning with the first terminal device in a first terminal device group.

In some embodiments, the configuration information of the PRS is carried in at least one of: resource pool configuration information; or SL BWP configuration information.

In some embodiments, the first time domain unit includes an OFDM symbol, and the second time domain unit includes a slot or a mini-slot.

It should be noted that when the apparatus provided in the foregoing embodiments implements its functions, division into the foregoing functional modules is merely used as an example. In practice, the foregoing functions may be allocated to and completed by different functional modules as required, that is, an internal structure of the apparatus is divided into different functional modules to complete all or some of the foregoing functions.

Specific manners of performing operations by the modules in the apparatus in the foregoing embodiments have been described in detail in the embodiments of the related method, and details are not described herein any further.

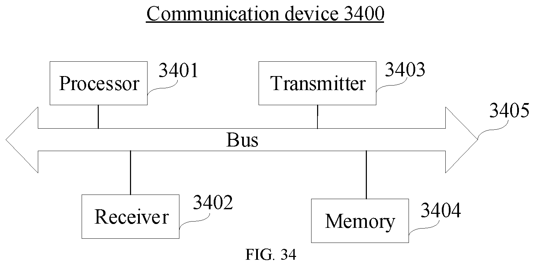

FIG. 34 is a schematic structural diagram of a communication device (terminal device and/or network device) according to some embodiments of the present disclosure. The communication device 3400 includes a processor 3401, a receiver 3402, a transmitter 3403, a memory 3404, and a bus 3405.

The processor 3401 includes one or more processing cores. The processor 3401 is configured to run a software program and module to execute various functional applications and information processing.

The receiver 3402 and the transmitter 3403 may be implemented as one communication component. The communication component may be one communication chip.

The memory 3404 is connected to the processor 3401 over the bus 3405. The memory 3404 may be configured to store at least one instruction. The processor 3401 is configured to load and execute the at least one instruction to perform various processes in the foregoing method embodiments.

In addition, the memory 3404 may be implemented by any type of volatile or non-volatile storage device or a combination thereof. The volatile or non-volatile storage device includes but is not limited to a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, or a programmable ROM (PROM).

When the communication device is implemented as the terminal device, the processor and a transceiver in the communication device according to the embodiments of the present disclosure may be implemented together as one communication chip, or the transceiver may separately form a communication chip. The transmitter in the transceiver performs the transmitting processes performed by the terminal device in any one of the foregoing methods. The receiver in the transceiver performs the receiving processes performed by the terminal device in any one of the foregoing methods. The processor performs a process other than the transmitting and receiving processes. Details are not described herein any further.

When the communication device is implemented as the network device, the processor and a transceiver in the communication device according to the embodiments of the present disclosure may be implemented together as one communication chip, or the transceiver may separately form a communication chip. The transmitter in the transceiver performs the transmitting processes performed by the network device in any one of the foregoing methods. The receiver in the transceiver performs the receiving processes performed by the network device in any one of the foregoing methods. The processor performs a process other than the transmitting and receiving processes. Details are not described herein any further.

In some embodiments, a computer-readable storage medium is further provided. The computer-readable storage medium stores at least one instruction, at least one program, a code set, or an instruction set. The at least one instruction, the at least one program, the code set, or the instruction set is loaded and executed by a processor to implement the SL-based transmission method or method for configuring a PRS based on SL provided in the foregoing method embodiments.

In some embodiments, a chip is further provided. The chip includes a programmable logic circuit and/or a program instruction. When running on a communication device, the chip is configured to implement, based on the programmable logic circuit and/or the program instruction, the SL-based transmission method or method for configuring a PRS based on SL provided in the foregoing method embodiments.

In some embodiments, a computer program product is further provided. A processor of a computer device is configured to run the computer program product, to cause the computer device to perform the foregoing SL-based transmission method or method for configuring a PRS based on SL.

A person skilled in the art should be aware that in the foregoing one or more examples, the functions described in the embodiments of the present disclosure may be implemented by hardware, software, firmware, or any combination thereof. When implemented by software, the functions may be stored in a computer-readable medium or transmitted as at least one instruction or code in the computer-readable medium. The computer-readable medium includes a computer storage medium and a communication medium. The communication medium includes any medium that facilitates transfer of a computer program from one place to another. The storage medium may be any usable medium accessible by a general-purpose computer or a special-purpose computer.

The foregoing descriptions are merely embodiments of the present disclosure and are not intended to limit the present disclosure. Any modification, equivalent replacement, and improvement within the spirit and principle of the present disclosure shall be included within the protection scope of the present disclosure.

**Claims**

1. A sidelink (SL)-based transmission method, applicable to a first terminal device, the method comprising:

   determining a first positioning reference signal (PRS) configuration based on first information; and
   transmitting a PRS to a second terminal device or receiving a PRS from a second terminal device based on the first PRS configuration.

2. The method according to claim 1, wherein the first information comprises at least one of:

   identification information of the first terminal device;
   time domain resource information of the PRS;
   frequency domain resource information of the PRS;
   positioning frequency layer information of the PRS;
   resource pool information;
   a quantity of first time domain units for performing an SL transmission in a second time domain unit;
   a quantity of first time domain units for transmitting the PRS in a second time domain unit;
   whether a second time domain unit comprises a physical sidelink feedback channel (PSFCH) resource;
   whether the PRS is mappable to a first time domain unit carrying a physical sidelink control channel (PSCCH);
   a PRS configuration of another terminal device performing cooperative positioning with the first terminal device in a first terminal device group;
   information predefined in a protocol;
   pre-configured information; or
   network configuration information; wherein
   each second time domain unit comprises at least one first time domain unit.

3. The method according to claim 2, wherein the identification information of the first terminal device comprises at least one of:

   a cell radio network temporary identifier (C-RNTI);
   a group identifier (ID) of a communication group to which the first terminal device belongs;
   a member ID of the first terminal device in a communication group;
   a layer-2 source ID; or
   a layer-2 destination ID.

4. The method according to claim 2, wherein the time domain resource information of the PRS comprises at least one of:

   information of the second time domain unit in which the PRS is located;
   position information of a first one of the first time domain units occupied by the PRS in the second time domain unit;
   quantity information of the first time domain units occupied by the PRS;
   repetition period information of the PRS;
   quantity information of repetitions of the PRS;
   time domain interval information of two adjacent repetitions of the PRS;
   offset information of the second time domain unit; or
   offset information of the first time domain unit.

5. The method according to claim 2, wherein the frequency domain resource information of the PRS comprises at least one of:

   a frequency domain resource bandwidth of the PRS;
   start frequency domain position information of the PRS; or
   start frequency domain offset information of the PRS.

**6.** The method according to claim 2, wherein the positioning frequency layer information of the PRS comprises at least one of:

information indicating a subcarrier spacing of the PRS;
a cyclic prefix (CP) of the PRS;
a frequency domain resource bandwidth of the PRS;
start frequency domain position information of the PRS;
start frequency domain offset information of the PRS;
information of a frequency domain reference point;
a comb size; or
a resource element (RE) spacing.

**7.** The method according to any one of claims 1 to 6, further comprising:

acquiring configuration information of the PRS, wherein the configuration information of the PRS comprises at least one PRS configuration; wherein
determining the first PRS configuration based on the first information comprises:

determining the first PRS configuration from the at least one PRS configuration based on the first information.

**8.** The method according to claim 7, wherein acquiring the configuration information of the PRS comprises: acquiring the configuration information of the PRS based on pre-configured information or network configuration information.

**9.** The method according to claim 8, wherein the network configuration information comprises at least one of:

resource pool configuration information; or
SL bandwidth part (BWP) configuration information.

**10.** The method according to claim 7, wherein acquiring the configuration information of the PRS comprises: receiving first signaling from the second terminal device, wherein the first signaling comprises the configuration information of the PRS.

**11.** The method according to claim 10, wherein the first signaling comprises at least one of:

PC5-radio resource control (RRC) signaling;
a medium access control (MAC) control element (CE); or
sidelink control information (SCI).

**12.** The method according to any one of claims 1 to 11, further comprising:

acquiring second signaling from the second terminal device, wherein the second signaling comprises the first information; wherein
the second signaling comprises at least one of:

PC5-radio resource control (RRC) signaling;
a medium access control (MAC) control element (CE); or
sidelink control information (SCI).

**13.** The method according to any one of claims 1 to 11, further comprising:
transmitting third signaling to the second terminal device, wherein the third signaling indicates the first PRS configuration, and the third signaling comprises at least one of:

PC5-radio resource control (RRC) signaling;
a medium access control (MAC) control element (CE); or
sidelink control information (SCI).

**14.** The method according to any one of claims 1 to 13, wherein

the PRS has a comb structure with a comb granularity of a first frequency domain unit, the first frequency domain unit comprising frequency domain resources of n consecutive resource elements (REs) in a frequency domain, n being a positive integer greater than 1.

15. The method according to claim 14, wherein the first frequency domain unit comprises a frequency domain resource of any one of:

a physical resource block (PRB);
a subchannel; or
a resource element group (REG);
wherein the subchannel comprises a plurality of consecutive PRBs in the frequency domain, and the REG comprises a plurality of consecutive subcarriers in the frequency domain.

16. The method according to claim 14, wherein the first PRS configuration comprises at least one of a comb size, a time domain length, or a signal offset value; wherein

the comb size comprises a spacing between two adjacent first frequency domain units of the PRS on a same first time domain unit;
the time domain length comprises a quantity of first time domain units occupied by the PRS in one second time domain unit; and
the signal offset value comprises an offset value of a first one of first frequency domain units of the PRS in a first one of first time domain units in one second time domain unit, and each second time domain unit comprises at least one first time domain unit.

17. The method according to claim 14, wherein the PRS is frequency division multiplexed with a physical sidelink control channel (PSCCH); or the PRS is not frequency division multiplexed with the PSCCH.

18. The method according to claim 14, wherein in one second time domain unit, a first time domain unit for transmitting a physical sidelink feedback channel (PSFCH) is not used for transmitting the PRS.

19. The method according to claim 18, wherein a repetition period of the PRS is an integer multiple of a period of the PSFCH.

20. The method according to claim 18, wherein a comb size of the comb structure or a quantity of first time domain units occupied by the PRS in one second time domain unit is less than or equal to a quantity of first time domain units available to transmit the PRS in one second time domain unit.

21. The method according to claim 20, wherein the quantity of the first time domain units available to transmit the PRS in one second time domain unit is determined based on at least one of:

whether the second time domain unit comprises a PSFCH resource;
whether the PRS is mappable to a first time domain unit of a physical sidelink control channel (PSCCH); or
a PRS configuration of another terminal device performing cooperative positioning with the first terminal device in the first terminal device group.

22. The method according to claim 2, 16, or 18, wherein the first time domain unit comprises an orthogonal frequency division multiplexing (OFDM) symbol, and the second time domain unit comprises a slot or a mini-slot.

23. A method for configuring a positioning reference signal (PRS) based on sidelink (SL), applicable to a first terminal device, the method comprising:

acquiring configuration information of a PRS, wherein the PRS has a comb structure with a comb granularity of a first frequency domain unit;
wherein the first frequency domain unit comprises frequency domain resources of n consecutive resource elements (REs) in a frequency domain, n being a positive integer greater than 1.

24. The method according to claim 23, wherein the first frequency domain unit comprises a frequency domain resource of any one of:

a physical resource block (PRB);
a subchannel; or
a resource element group (REG);
wherein the subchannel comprises a plurality of consecutive PRBs in the frequency domain, and the REG comprises a plurality of consecutive subcarriers in the frequency domain.

25. The method according to claim 23, wherein the configuration information of the PRS comprises at least one of a comb size, a time domain length, or a signal offset value; wherein

the comb size comprises a spacing between two adjacent first frequency domain units of the PRS on a same first time domain unit;
the time domain length comprises a quantity of first time domain units occupied by the PRS in one second time domain unit; and
the signal offset value comprises an offset value of a first one of first frequency domain units of the PRS in a first one of first time domain units in a second time domain unit, and each second time domain unit comprises at least one first time domain unit.

26. The method according to any one of claims 23 to 25, wherein the PRS is frequency division multiplexed with a physical sidelink control channel (PSCCH); or the PRS is not frequency division multiplexed with the PSCCH.

27. The method according to any one of claims 23 to 25, wherein in one second time domain unit, a first time domain unit for transmitting a physical sidelink feedback channel (PSFCH) is not used for transmitting the PRS.

28. The method according to claim 27, wherein a repetition period of the PRS is an integer multiple of a period of the PSFCH.

29. The method according to claim 27, wherein a comb size of the comb structure or a quantity of first time domain units occupied by the PRS in one second time domain unit is less than or equal to a quantity of first time domain units available to transmit the PRS in one second time domain unit.

30. The method according to claim 29, wherein the quantity of the first time domain units available to transmit the PRS in one second time domain unit is determined based on at least one of:

whether the second time domain unit comprises a PSFCH resource;
whether the PRS is mappable to a first time domain unit of a physical sidelink control channel (PSCCH); or
a PRS configuration of another terminal device performing cooperative positioning with the first terminal device in a first terminal device group.

31. The method according to any one of claims 23 to 30, wherein acquiring the configuration information of the PRS comprises:
acquiring the configuration information of the PRS based on pre-configured information or network configuration information.

32. The method according to claim 31, wherein the network configuration information comprises at least one of:

resource pool configuration information; or
SL bandwidth part (BWP) configuration information.

33. The method according to any one of claims 23 to 30, wherein acquiring the configuration information of the PRS comprises:
receiving first signaling from a second terminal device, wherein the first signaling comprises the configuration information of the PRS.

34. The method according to claim 33, wherein the first signaling comprises at least one of:

PC5-radio resource control (RRC) signaling;
a medium access control (MAC) control element (CE); or
sidelink control information (SCI).

35. The method according to claim 25 or 27, wherein the first time domain unit comprises an orthogonal frequency division multiplexing (OFDM) symbol, and the second time domain unit comprises a slot or a mini-slot.

36. A method for configuring a positioning reference signal (PRS) based on sidelink (SL), applicable to a network device, the method comprising:

transmitting configuration information of a PRS to a first terminal device, wherein the configuration information of the PRS comprises at least one PRS configuration; wherein
the at least one PRS configuration is used to determine a first PRS configuration by the first terminal device based on first information, the first PRS configuration being used for transmitting the PRS to a second terminal device or receiving the PRS from the second terminal device by the first terminal device based on the first PRS configuration.

37. The method according to claim 36, wherein the first information comprises at least one of:

identification information of the first terminal device;
time domain resource information of the PRS;
frequency domain resource information of the PRS;
positioning frequency layer information of the PRS;
resource pool information;
a quantity of first time domain units for performing an SL transmission in a second time domain unit;
a quantity of first time domain units for transmitting the PRS in a second time domain unit;
whether a second time domain unit comprises a physical sidelink feedback channel (PSFCH) resource;
whether the PRS is mappable to a first time domain unit carrying a physical sidelink control channel (PSCCH);
a PRS configuration of another terminal device performing cooperative positioning with the first terminal device in a first terminal device group;
information predefined in a protocol;
pre-configured information; or
network configuration information; wherein
each second time domain unit comprises at least one first time domain unit.

38. The method according to claim 36 or 37, wherein the configuration information of the PRS is carried in at least one of:

resource pool configuration information; or
SL bandwidth part (BWP) configuration information.

39. The method according to any one of claims 36 to 38, wherein the PRS has a comb structure with a comb granularity of a first frequency domain unit, the first frequency domain unit comprising frequency domain resources of n consecutive resource elements (REs) in a frequency domain, n being a positive integer greater than 1.

40. The method according to claim 39, wherein the first frequency domain unit comprises a frequency domain resource of any one of:

a physical resource block (PRB);
a subchannel; or
a resource element group (REG);
wherein the subchannel comprises a plurality of consecutive PRBs in the frequency domain, and the REG comprises a plurality of consecutive subcarriers in the frequency domain.

41. The method according to claim 39, wherein the first PRS configuration comprises at least one of a comb size, a time domain length, or a signal offset value; wherein

the comb size comprises a spacing between two adjacent first frequency domain units of the PRS on a same first time domain unit;
the time domain length comprises a quantity of first time domain units occupied by the PRS in one second time domain unit; and
the signal offset value comprises an offset value of a first one of first frequency domain units of the PRS in a first one of first time domain units in a second time domain unit, and each second time domain unit comprises at least one first time domain unit.

42. The method according to claim 39, wherein the PRS is frequency division multiplexed with a physical sidelink control channel (PSCCH); or the PRS is not frequency division multiplexed with the PSCCH.

43. The method according to claim 39, wherein in one second time domain unit, a first time domain unit for transmitting a physical sidelink feedback channel (PSFCH) is not used for transmitting the PRS.

44. The method according to claim 43, wherein a repetition period of the PRS is an integer multiple of a period of the PSFCH.

45. The method according to claim 43, wherein a comb size of the comb structure or a quantity of first time domain units occupied by the PRS in one second time domain unit is less than or equal to a quantity of first time domain units available to transmit the PRS in one second time domain unit.

46. The method according to claim 45, wherein the quantity of the first time domain units available to transmit the PRS in one second time domain unit is determined based on at least one of:

whether the second time domain unit comprises a PSFCH resource;
whether the PRS is mappable to a first time domain unit of a physical sidelink control channel (PSCCH); or
a PRS configuration of another terminal device performing cooperative positioning with the first terminal device in the first terminal device group.

47. The method according to claim 37, 41, or 43, wherein the first time domain unit comprises an orthogonal frequency division multiplexing (OFDM) symbol, and the second time domain unit comprises a slot or a mini-slot.

48. A method for configuring a positioning reference signal (PRS) based on sidelink (SL), applicable to a network device, the method comprising:

transmitting configuration information of a PRS to a first terminal device, wherein the PRS has a comb structure with a comb granularity of a first frequency domain unit; wherein
the first frequency domain unit comprises frequency domain resources of n consecutive resource elements (REs) in a frequency domain, n being a positive integer greater than 1.

49. The method according to claim 48, wherein the first frequency domain unit comprises a frequency domain resource of any one of:

a physical resource block (PRB);
a subchannel; or
a resource element group (REG); wherein
the subchannel comprises a plurality of consecutive PRBs in the frequency domain, and the REG comprises a plurality of consecutive subcarriers in the frequency domain.

50. The method according to claim 48, wherein the configuration information of the PRS comprises at least one of a comb size, a time domain length, or a signal offset value; wherein

the comb size comprises a spacing between two adjacent first frequency domain units of the PRS on a same first time domain unit;
the time domain length comprises a quantity of first time domain units occupied by the PRS in one second time domain unit; and
the signal offset value comprises an offset value of a first one of first frequency domain units of the PRS in a first one of first time domain units in a second time domain unit, and each second time domain unit comprises at least one first time domain unit.

51. The method according to any one of claims 48 to 50, wherein the PRS is frequency division multiplexed with a physical sidelink control channel (PSCCH); or the PRS is not frequency division multiplexed with the PSCCH.

52. The method according to any one of claims 48 to 50, wherein in one second time domain unit, a first time domain unit for transmitting a physical sidelink feedback channel (PSFCH) is not used for transmitting the PRS.

53. The method according to claim 52, wherein a repetition period of the PRS is an integer multiple of a period of the PSFCH.

54. The method according to claim 52, wherein a comb size of the comb structure or a quantity of first time domain units occupied by the PRS in one second time domain unit is less than or equal to a quantity of first time domain units available to transmit the PRS in one second time domain unit.

55. The method according to claim 54, wherein the quantity of the first time domain units available to transmit the PRS in one second time domain unit is determined based on at least one of:

whether the second time domain unit comprises a PSFCH resource;
whether the PRS is mappable to a first time domain unit of a physical sidelink control channel (PSCCH); or
a PRS configuration of another terminal device performing cooperative positioning with the first terminal device in a first terminal device group.

56. The method according to any one of claims 48 to 55, wherein the configuration information of the PRS is carried in at least one of:

resource pool configuration information; or
SL bandwidth part (BWP) configuration information.

57. The method according to claim 50 or 52, wherein the first time domain unit comprises an orthogonal frequency division multiplexing (OFDM) symbol, and the second time domain unit comprises a slot or a mini-slot.

58. A sidelink (SL)-based transmission apparatus, comprising:

a determining module, configured to determine a first positioning reference signal (PRS) configuration based on first information; and
a transcribing module, configured to transmit a PRS to a second terminal device or receive a PRS from a second terminal device based on the first PRS configuration.

59. An apparatus for configuring a positioning reference signal (PRS) based on sidelink (SL), comprising:

an acquiring module, configured to acquire configuration information of a PRS, wherein the PRS has a comb structure with a comb granularity of a first frequency domain unit;
wherein the first frequency domain unit comprises frequency domain resources of n consecutive resource elements (REs) in a frequency domain, n being a positive integer greater than 1.

60. An apparatus for configuring a positioning reference signal (PRS) based on sidelink (SL), comprising:

a transmitting module, configured to transmit configuration information of a PRS to a first terminal device, wherein the configuration information of the PRS comprises at least one PRS configuration; wherein
the at least one PRS configuration is used to determine a first PRS configuration by the first terminal device based on first information, the first PRS configuration being used for transmitting the PRS to a second terminal device or receiving the PRS from a second terminal device by the first terminal device based on the first PRS configuration.

61. An apparatus for configuring a positioning reference signal (PRS) based on sidelink (SL), comprising:

a transmitting module, configured to transmit configuration information of a PRS to a first terminal device, wherein the PRS has a comb structure with a comb granularity of a first frequency domain unit; wherein
the first frequency domain unit comprises frequency domain resources of n consecutive resource elements (REs) in a frequency domain, n being a positive integer greater than 1.

62. A terminal device, comprising:

a processor;

a transceiver connected to the processor; and

a memory configured to store one or more instructions executable by the processor; wherein

the processor is configured to load the one or more instructions to cause the terminal device to perform the sidelink (SL)-based transmission method as defined in any one of claims 1 to 22 or the method for configuring a positioning reference signal (PRS) based on SL as defined in any one of claims 23 to 35.

63. A network device, comprising:

a processor;

a transceiver connected to the processor; and

a memory configured to store one or more instructions executable by the processor; wherein

the processor is configured to load the one or more instructions to cause the network device to implement the method for configuring a positioning reference signal (PRS) based on sidelink (SL) as defined in any one of claims 36 to 57.

64. A computer-readable storage medium, wherein the readable storage medium stores one or more executable instructions, and a processor is configured to load and execute the one or more executable instructions, to perform the sidelink (SL)-based transmission method as defined in any one of claims 1 to 22 or the method for configuring a positioning reference signal (PRS) based on SL as defined in any one of claims 23 to 57.

65. A chip, comprising a programmable logic circuit or a program, wherein the chip is configured to perform the sidelink (SL)-based transmission method as defined in any one of claims 1 to 22 or the method for configuring a positioning reference signal (PRS) based on SL as defined in any one of claims 23 to 57 based on the programmable logic circuit or the program.

66. A computer program product, comprising one or more computer instructions, wherein the one or more computer instructions are stored in a computer-readable storage medium, and a processor of a computer device is configured to read the one or more computer instructions from the computer-readable storage medium and execute the one or more computer instructions, to cause the computer device to perform the sidelink (SL)-based transmission method as defined in any one of claims 1 to 22 or the method for configuring a positioning reference signal (PRS) based on SL as defined in any one of claims 23 to 57.

Base
station

SL
Terminal communication Terminal

FIG. 1

Base
station

SL
Terminal communication Terminal

FIG. 2

Base
station

SL
Terminal communication Terminal

FIG. 3

Terminal 1 Terminal 2
Data

FIG. 4

Communication group

Terminal 2

Terminal 1

Terminal 3

Terminal 4

FIG. 5

Terminal 2

Terminal 6

Terminal 1

Terminal 3

Terminal 5

Terminal 4

FIG. 6

SL start symbol

SL length
symbol

Frequency

0  1  2  3  4  5  6  7  8  9  10  11  12  13

Time

PSCCH    PSSCH    PSFCH    GP    Symbol
unavailable for an
SL

FIG. 7

AGC symbol
for PSFCH
reception

| AGC | D M R S / PSCCH | | | DMRS | PSSCH | | DMRS | | | GP | (AGC) | PSFCH | GP |

FIG. 8

| AGC | D M R S / PSCCH | | | DMRS | | | DMRS | | | DMRS | | | GP |

FIG. 9

| RE#0 | | RE#2 | | RE#4 | | RE#6 | | RE#8 | | RE#10 | |
|---|---|---|---|---|---|---|---|---|---|---|---|
| P-ort 0/ P-ort 1 | | P-ort 0/ P-ort 1 | | P-ort 0/ P-ort 1 | | P-ort 0/ P-ort 1 | | P-ort 0/ P-ort 1 | | P-ort 0/ P-ort 1 | |
| | RE#1 | | RE#3 | | RE#5 | | RE#7 | | RE#9 | | RE#11 |

FIG. 10

$K_{comb}^{PRS} = 6$ subcarriers, $L=6$

PRS #1: $k_{offset}^{PRS} = 0$

PRS #2: $k_{offset}^{PRS} = 2$

Subcarrier

OFDM symbol

FIG. 11

Communication system 1200

CN

30

20

AN

10

Terminal device

FIG. 12

Determining a first PRS configuration based on first information 1302

Transmitting a PRS to a second terminal device or receiving a PRS from a second terminal device based on the first PRS configuration 1304

FIG. 13

Acquiring configuration information of a PRS, wherein the PRS has a comb structure with a comb granularity of a first frequency domain unit

1402

FIG. 14

Transmitting configuration information of a PRS to a first terminal device, wherein the configuration information of the PRS includes at least one PRS configuration

1502

FIG. 15

Transmitting configuration information of a PRS to a first terminal device, wherein the PRS has a comb structure with a comb granularity of a first frequency domain unit

1602

FIG. 16

Subcarrier →

$K_{comb}^{PRS}$ =6 PRB, L=6

PRS #1 : $k_{offset}^{PRS}$ =0

PRS #2 : $k_{offset}^{PRS}$ =2

Subcarrier →

PRB

OFDM symbol

FIG. 17

$K_{comb}^{PRS} = 6$ subchannels, L=6

PRS #1: $k_{offset}^{PRS}=0$

PRS #2: $k_{offset}^{PRS}=2$

Subchannel

OFDM symbol

FIG. 18

$K_{comb}^{PRS} = 6REG$, L=6

PRS #1 : $k_{offset}^{PRS}=0$

PRS #2 : $k_{offset}^{PRS}=2$

REG

OFDM symbol

FIG. 19

$K_{comb}^{PRS} = 6$ PRB, L=1

PRS #1 : $k_{offset}^{PRS} = 0$

Subcarrier

PRB

OFDM symbol

FIG. 20

$K_{comb}^{PRS} = 2$ PRB, L=2

PRS #1 : $k_{offset}^{PRS} = 0$

PRS #2 : $k_{offset}^{PRS} = 1$

Subcarrier

Subcarrier

PRB

OFDM symbol

FIG. 21

FIG. 22

$K_{comb}^{PRS}$ =4 PRB, L=4

PRS #1 : $k_{offset}^{PRS}$ =0

PRS #2 : $k_{offset}^{PRS}$ =2

FIG. 23

$K_{comb}^{PRS}$ =12 PRB, L=12

PRS #1 : $k_{offset}^{PRS}$ =1

PRS #2 : $k_{offset}^{PRS}$ =0

Symbols available to transmit the PRS

(a)

Symbols available to transmit the PRS

(b)

FIG. 24

Symbols available to transmit the PRS

(a)

Symbols available to transmit the PRS

(b)

FIG. 25

Symbols available to transmit the PRS     Symbols available to transmit the PRS

| A G C | PSCCH | | | | | | | | | | | | | | G P |
|---|---|---|---|---|---|---|---|---|---|---|---|---|---|---|---|

Slot x

...

| A G C | PSCCH | | | | | | | | | | | G P | PSF CH | G P |
|---|---|---|---|---|---|---|---|---|---|---|---|---|---|---|

Slot x+P1

FIG. 26

| Second terminal device | | First terminal device |
|---|---|---|

2702. Acquiring configuration information of a PRS based on pre-configured information

2704. Determining a first PRS configuration in the configuration information of the PRS based on first information

2706. Third signaling

2708. PRS

FIG. 27

| Second terminal device | | First terminal device |
|---|---|---|

2802. Acquiring configuration information of a PRS based on network configuration information

2804. Determining a first PRS configuration in the configuration information of the PRS based on first information

2806. Third signaling

2808. PRS

FIG. 28

| Second terminal device | | First terminal device |
|---|---|---|

2902. First signaling

2904. Determining a first PRS configuration in configuration information of a PRS based on first information

2906. Third signaling

2908.PRS

FIG. 29

| Determining module | 3001 |
|---|---|
| Transcribing module | 3002 |
| Acquiring module | 3003 |

FIG. 30

| Acquiring module | 3101 |
|---|---|
| Receiving module | 3102 |

FIG. 31

| Transmitting module | 3201 |
|---|---|

FIG. 32

| Transmitting module | 3301 |
|---|---|

FIG. 33

Communication device 3400

FIG. 34

| INTERNATIONAL SEARCH REPORT | International application No. |
| --- | --- |
| | **PCT/CN2022/111065** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 侧链路, 侧行链路, 直通链路, 直接链路, 直接通信, D2D, 定位参考信号, 资源, 配置, 时域, 频域, 梳齿, 梳状, sidelink, SL, PRS, SPRS, positioning reference signal, resource configuration, comb

**C. DOCUMENTS CONSIDERED TO BE RELEVANT**

| Category* | Citation of document, with indication, where appropriate, of the relevant passages | Relevant to claim No. |
| --- | --- | --- |
| X | CN 112583553 A (DATANG MOBILE COMMUNICATIONS EQUIPMENT CO., LTD.) 30 March 2021 (2021-03-30) <br> description, paragraphs [0105]-[0261] | 1-66 |
| X | CN 112584487 A (DATANG MOBILE COMMUNICATIONS EQUIPMENT CO., LTD.) 30 March 2021 (2021-03-30) <br> description, paragraphs [0144]-[0366] | 1-66 |
| X | CN 113055136 A (DATANG MOBILE COMMUNICATIONS EQUIPMENT CO., LTD.) 29 June 2021 (2021-06-29) <br> description, paragraphs [0110]-[0407] | 1-66 |
| A | CN 112789915 A (GUANGDONG OPPO MOBILE COMMUNICATIONS CO., LTD.) 11 May 2021 (2021-05-11) <br> entire document | 1-66 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 April 2023** | **28 April 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/111065**

| Patent document cited in search report | | | Publication date (day/month/year) | Patent family member(s) | Publication date (day/month/year) |
|---|---|---|---|---|---|
| CN | 112583553 | A | 30 March 2021 | None | |
| CN | 112584487 | A | 30 March 2021 | None | |
| CN | 113055136 | A | 29 June 2021 | None | |
| CN | 112789915 | A | 11 May 2021 | None | |

Form PCT/ISA/210 (patent family annex) (July 2022)